# EUROPÄISCHE PATENTSCHRIFT

(11) **EP 3 711 923 B1**
(45) Veröffentlichungstag und Bekanntmachung des Hinweises auf die Patenterteilung: **04.05.2022**
(21) Anmeldenummer: 20164252.7
(22) Anmeldetag: 19.03.2020
(51) Int. Cl.: B29B 9/06, B29C 48/00, B29C 48/255, B29C 48/92

(54) **DÜSENANORDNUNG MIT DRUCKREGULIERVORRICHTUNG, GRANULIERVORRICHTUNG SOWIE DARAUF BEZOGENES VERFAHREN**
NOZZLE ASSEMBLY WITH PRESSURE REGULATING DEVICE, GRANULATING DEVICE AND RELATED METHOD
AGENCEMENT DE BUSE POURVU DE DISPOSITIF DE RÉGULATION DE PRESSION, DISPOSITIF DE GRANULATION AINSI QUE PROCÉDÉ ASSOCIÉ

(30) Priorität: 20.03.2019 DE 102019107140
(43) Veröffentlichungstag der Anmeldung: 23.09.2020
(73) Patentinhaber: Nordson Corporation, Westlake, OH 44145-1119 (US)
(72) Erfinder: Schnellbach, Nikolai, 48308 Senden (DE); Baklashov, Anatoly, 48163 Münster (DE)
(74) Vertreter: Eisenführ Speiser

(56) Entgegenhaltungen:
- EP-A1- 3 511 139
- EP-A2- 1 186 397
- WO-A1-2008/086544
- WO-A1-2016/043694
- WO-A2-2006/060345
- GB-A- 2 089 719
- US-A- 4 219 516
- US-A1- 2016 007 073

## Beschreibung

Die Erfindung betrifft eine Düsenanordnung für eine Granuliervorrichtung, mit einer Düsenplatte mit Düsenlöchern, und einer mit dem Düsenkörper gekoppelten Druckreguliervorrichtung, umfassend einen Grundkörper mit einer Fluid-Eintrittsseite sowie einer Fluid-Austrittsseite, einen in dem Grundkörper ausgebildeten Strömungskanal zur fluidleitenden Verbindung der Fluid-Eintrittsseite mit der Fluid-Austrittsseite sowie einen mit dem Strömungskanal fluidleitend verbundenen und im Bereich der Fluid-Austrittsseite ausgebildeten Ringkanalabschnitt.

Derartige Düsenanordnungen sind im Stand der Technik bekannt und finden beispielsweise bei Granuliervorrichtungen Verwendung. Sie werden dazu eingesetzt, geschmolzenes Granuliermaterial, wie beispielsweise thermoplastische Kunststoffe, mittels einer Düsenplatte in die Form von zumeist mehreren Schmelzesträngen zu extrudieren. Im Rahmen des Verfahrens der sogenannten Unterwassergranulierung werden die einzelnen Schmelzestränge anschließend mittels einer Schneidvorrichtung in Strangabschnitte unterteilt, welche, wenn sie mit einem Kühlfluid, beispielsweise Wasser, in Kontakt treten, abgekühlt werden und somit Granulatkörner bilden. Das Verfahren der Unterwassergranulierung ermöglicht einen hohen Granulierungsmaterialdurchsatz bei geringem erforderlichem Bauraum einer solchen Vorrichtung und bei geringen Emissionen in Form von Staub oder Lärm.

Bei den im Stand der Technik vorbekannten Düsenanordnungen wird Schmelze an einer Eintrittsseite in einen Düsenkörper geleitet. Mittels einer Vielzahl von Strömungskanälen wird die Schmelze durch den Düsenkörper geführt und gelangt zu einer Düsenplatte. Die Düsenplatte weist typischerweise eine Vielzahl von Düsenlöchern auf, um eine hohe Produktivität und, in Abhängigkeit von der zu verarbeitenden Schmelze, ein gewünschtes Granulierergebnis - das heißt hohe Durchsätze bzw. kleine Granulatkörner - zu erzielen. Hierbei ergibt sich bei klassischen, aus dem Stand der Technik vorbekannten Düsenanordnungen der Nachteil, dass insbesondere die Düsenkörper sowie die Düsenplatten jeweils für bestimmte Durchsätze und Viskositäten von Kunststoffschmelzen ausgelegt sind. So ist jedes Material, bzw. jede Schmelze typischerweise mit vorteilhaften Prozessparametern, wie beispielsweise einem vorgegebenen Verarbeitungsdruck zu verarbeiten, um sicherzustellen, dass die Schmelzestränge auf eine gewünschte Weise aus der Düsenplatte austreten. Bei aus dem Stand der Technik vorbekannten Düsenanordnungen führen Materialwechsel typischerweise dazu, dass die vollständige Düsenanordnung ausgetauscht wird und für jedes zu verarbeitende Material oder zumindest für Materialgruppen unterschiedlicher Düsenanordnungen bereitzuhalten sind. Sollen unterschiedliche Materialien verarbeitet werden, so ergibt sich hierdurch eine hohe Kapitalbindung, da eine Vielzahl von Düsenanordnungen vorgehalten werden müssen. Darüber hinaus gestaltet sich der Austausch einer Düsenanordnung typischerweise zeitaufwendig wodurch insgesamt ein Wechsel des zu verarbeitenden Materials mit hohen Rüstkosten einhergeht.

Um die Verarbeitung unterschiedlicher Materialien mit unterschiedlichen Viskositäten mit einer einzigen Düsenanordnung zu ermöglichen, ist aus dem Stand der Technik die Verwendung von Druckreguliervorrichtungen bekannt. Aus WO 2006/060345 A2 ist eine Druckreguliervorrichtung für die Extrusion von polymeren Blasfolien, Rohren und anderen durchgehenden Profilen mit kreisförmigem oder allgemein kreisförmigem Querschnitt bekannt. Ferner betrifft EP 1 186 397 A2 einen einstellbaren Strömungskanal für einen Extruderkopf.

Beispielsweise betrifft die DE 20 2006 018 456 U1 einen Düsenkopf einer Kunststoffstranggranulieranlage. Der betreffende Düsenkopf weist eine Schmelzeeintrittsöffnung zum Aufnehmen von Schmelze aus einem Extruder und einen Schmelzverteiler zum Verteilen von Schmelze von der Schmelzeeintrittsöffnung auf eine Vielzahl von Schmelzeleitkanälen mit sich zu einem Ende hin öffnenden Düsen zum Austreten von schmelzflüssigen Kunststoffsträngen auf, wobei der Düsenkopf eine Mehrzahl von zwischen der Schmelzeeintrittsöffnung und den Düsen angeordneten Engstellen für den Durchfluss von Schmelze besitzt, die in ihrem Querschnitt variabel und individuell einstellbar sind.

Allerdings bringt eine solche Lösung den Nachteil mit sich, dass die Herstellungs- und Wartungskosten einer solchen Anordnung aufgrund der hohen Komplexität gegenüber den aus dem Stand der Technik vorbekannten klassischen Düsenanordnungen signifikant steigen. Zwar lässt sich mit einer solchen Vorrichtung verhindern, dass eine Vielzahl von Düsenanordnungen zur Verarbeitung unterschiedlicher Materialien mit unterschiedlichen Viskositäten bereitgehalten werden müssen, der sich hierdurch potenziell ergebende Kostenvorteil lässt sich aufgrund der hohen Komplexität der vorgeschlagenen Vorrichtung jedoch nicht bestmöglich ausschöpfen.

Ergänzend wird noch auf die nachveröffentlichte Offenbarung der EP 3 511 139 A1 (Stand der Technik unter Art. 54(3) EPÜ) verwiesen; diese Druckschrift zeigt zwar verschiedene Strömungsquerschnitts-Regulierungselemente für eine Granuliervorrichtung, diese sind aber nicht beweglich gestaltet.

Vor diesem Hintergrund lag der Erfindung die Aufgabe zugrunde, eine Düsenanordnung der eingangs bezeichneten Art dahingehend weiterzubilden, dass die im Stand der Technik aufgefundenen Nachteile möglichst weitgehend behoben werden. Insbesondere war eine Düsenanordnung anzugeben, welche für eine Vielzahl von unterschiedlichen Materialien, Materialdurchsätzen und Viskositäten verwendbar ist und gleichzeitig kostengünstig herstellbar ist sowie funktionssicher und leicht wartbar ist.

Diese Aufgabe wird durch eine Düsenanordnung für eine Granuliereinrichtung gemäss Anspruch 1 sowie durch ein Verfahren zur Druckregulierung eines Schmelzeflusses in einer solchen Düsenanordnung gemäss Anspruch 15 gelöst; bevorzugte Ausgestaltungen sind Gegenstand der abhängigen Ansprüche.

Erfindungsgemäß wird die Aufgabe bei einer Düsenanordnung der eingangs genannten Art durch ein relativ zu dem Ringkanalabschnitt und/oder dem Strömungskanal bewegbares Strömungsquerschnitts-Regulierelement zur Beeinflussung eines Strömungsquerschnitts des Ringkanalabschnitts gelöst.

Die Erfindung macht sich die Erkenntnis zunutze, dass die Bewegung eines einzelnen Bauteils, bzw. einer hinsichtlich seiner Bauteilanzahl eng begrenzten Baugruppe dazu verwendet werden kann, den freien Strömungsquerschnitt eines betreffenden Ringkanalabschnitts einer Düsenanordnung so zielführend zu verändern, dass mit einer solchen Düsenanordnungen unterschiedliche Materialien mit unterschiedlichen Durchsätzen und Viskositäten verarbeitet werden können.

Ein solches Strömungsquerschnitts-Regulierelement kann dabei insbesondere dazu verwendet werden, den freien Strömungsquerschnitt in einem Ringkanalabschnitt, welcher beispielsweise eine Vielzahl von Strömungskanälen mit Schmelze versorgt, zu beeinflussen. Alternativ oder zusätzlich kann das Strömungsquerschnitts-Regulierelement relativ zu einem Strömungskanal bewegbar sein. Somit kann ein einzelnes Strömungsquerschnitts-Regulierelement dazu eingesetzt werden, mittelbar den Schmelzedruck in einer gesamten Düsenanordnung zu beeinflussen. Die Beeinflussung des freien Strömungsquerschnittes und des Schmelzedruckes erfolgt darüber hinaus in unmittelbare Nähe zu der Düsenplatte, aus welcher die Schmelzestränge austreten. Somit kann insgesamt der Schmelzedruck sehr genau justiert werden, wobei gleichzeitig die Bauteilkomplexität der erfindungsgemäßen Vorrichtung gering ist und diese gleichsam einfach zu warten ist. Gegenüber aus dem Stand der Technik vorbekannten Druckreguliervorrichtungen lässt sich die Kosteneffizienz mittels der erfindungsgemäßen Druckregelvorrichtung deutlich steigern.

Die Erfindung wird dadurch weitergebildet, dass das Regulierelement in dem Ringkanalabschnitt angeordnet ist. Vorzugsweise wird das Regulierelement dabei von Schmelze umflossen. Das Regulierelement kann nun dazu eingesetzt werden, den Spalt zwischen dem Regulierelement und dem Ringkanalabschnitt und somit den freien Strömungsquerschnitt durch Bewegung des Regulierelements relativ zu dem Ringkanalabschnitt zu beeinflussen. Hierdurch ergibt sich der Vorteil, dass der freie Strömungsquerschnitt und somit mittelbar die Druckverhältnisse in der Schmelze sehr fein dosiert beeinflussbar sind. Auch stellt eine derartige Anordnung sicher, dass der Schmelzefluss möglichst geringfügig beeinträchtigt wird, insbesondere eine starke Wirbelbildung sicher verhindert wird.

Gemäß einer bevorzugten Ausführungsform weist das Regulierelement einen Regulierring sowie einen mit dem Regulierring verbundenen Haltering auf. Ein solcher zweistückiger Aufbau ermöglicht eine einfache Austauschbarkeit des Regulierrings und einer bedarfsweisen Anpassung desselben an beispielsweise unterschiedliche Materialien, Durchsätze oder Viskositäten. Auch ist im Verschleißfalle ein einfacher Austausch der Einzelkomponenten gewährleistet. Regulierring und Haltering können dabei auf vielfache Weise verbunden sein. Infrage kommt beispielsweise eine Schraubverbindung, eine hitzebeständige Klebeverbindung oder auch eine formschlüssige Verbindung.

Die Erfindung wird dadurch weitergebildet, dass der Regulierring keilförmig ausgebildet ist. Eine Keilform des Regulierrings hat sich dabei als besonders günstig zur Beeinflussung des freien Strömungsquerschnitts erwiesen, ohne den Schmelzestrom beispielsweise durch Wirbelbildung nachteilig zu beeinflussen. Gemäß einer alternativen Ausführungsform kann der Regulierring konkave und/oder konvexe Abschnitte zur zielgerichteten Strömungsbeeinflussung aufweisen oder auf andere Weise strömungsgünstig ausgebildet sein.

Gemäß einer bevorzugten Weiterbildung weist der Regulierring Stifte auf, welche sich in Abhängigkeit von der Position des Regulierrings zumindest abschnittsweise in den Ringkanalabschnitt erstrecken. Die zusätzliche Verwendung solcher Stifte, auch als Druckregulierstifte bezeichnet, ermöglicht eine zusätzliche bereichsweise Einschränkung des freien Strömungsquerschnitts, sodass sich der Druck der Schmelze mittels solcher Stifte zusätzlich beeinflussen lässt. Alternativ oder zusätzlich können die Stifte so dimensioniert sein, dass sie insbesondere in die in dem Düsenkörper ausgebildeten Strömungskanäle hineinreichen. Hierdurch lässt sich das Gebiet der Druckbeeinflussung näher in Richtung der Düsenscheibe verlagern. Je nach verwendetem Schmelze- bzw. je nach gewünschtem Materialdurchsatz lässt sich die Qualität der Schmelzestränge hiermit positiv beeinflussen.

Weiterhin bevorzugt verfügt die Düsenanordnung über mindestens einen mit dem Regulierelement verbundenen Aktuator zur Bewegung des Regulierelements relativ zu dem Ringkanalabschnitt, insbesondere in einer translatorischen Richtung entlang einer Grundkörperlängsachse. Hierbei weist die Düsenanordnung bevorzugt drei oder mehr solcher Aktuatoren auf, um sicherzustellen, dass das Regulierelement im Bereich des Ringkanals einen über den Ringkanalverlauf möglichst konstanten Abstand zu den seitlichen Begrenzungen des Ringkanals aufweist. Insbesondere ist jedenfalls sicherzustellen, dass ein Verkanten des Regulierelements verhindert wird und somit mittelbar ein ungleichmäßiger Schmelzeaustritt aus der Düsenplatte.

Gemäß einer alternativen Ausführungsform ist der Aktuator als fluidbetätigter Aktuator ausgebildet, insbesondere als pneumatischer Aktuator oder hydraulischer Aktuator. Die Ausbildung des Aktuators als fluidbetätigter Aktuator hat sich als vorzugswürdig für Anwendungen gezeigt, bei denen die Anzahl mechanischer Bauteile reduziert werden soll und gleichzeitig ein verschleißarmer Aktuator verwendet werden soll.

Vorzugsweise weist der fluidbetätigte Aktuator einen Zylinder mit mindestens einem Druckfluidein-/auslass auf, wobei der Zylinder und der mindestens eine Druckfluidein-/auslass in dem Grundkörper ausgebildet sind. Durch die Ausbildung des Zylinders in dem Grundkörper lässt sich die Anzahl der erforderlichen Bauteile weiter reduzieren. Vorzugsweise ist in dem Zylinder ein Kolben angeordnet, der mittels eines Faltenbalges gegenüber dem Zylinder abgedichtet ist. Eine haltbare und sichere Dichtung kann hiermit gewährleistet werden.

Der Aktuator ist vorzugsweise so ausgebildet, dass dieser einen mit dem Haltering verbundenen Zapfen aufweist, welcher mit einem translatorisch bewegbaren Stößel wirkverbunden ist. Die beschriebene Anordnung ermöglicht eine feinfühlige Einstellung der Position des Halterings bzw. des Regulierelements bei gleichzeitig konstruktiv einfachem Aufbau.

Ferner ist bevorzugt, dass der Grundkörper mindestens eine Lagerungsbohrung zur Lagerung des Stößels und zur Führung des Stößels zu einer Außenseite des Grundkörpers aufweist. Diese Lagerungsbohrung weist bevorzugt eine Dichtung zur Verhinderung eines Schmelzeaustrittes aus dem Gehäuse auf. Weiterhin ist bevorzugt, dass der Stößel ein Betätigungselement aufweist, insbesondere eine außerhalb des Gehäuses angeordnet Mutter oder ein Zahnrad, welche bevorzugt mit einem Außengewinde des Stößels korrespondieren. Ein solches außerhalb des Gehäuses angeordnete Betätigungselement ermöglicht auf einfache Weise eine Betätigung des Regulierelements und es wird sichergestellt, dass Schmelze nicht aus dem Gehäuse austreten kann. Die Art des Betätigungselements kann dabei insgesamt flexibel gewählt werden und richtet sich insbesondere danach, wie selbiges angesteuert werden soll. Beispielsweise kann das Betätigungselement Vorrichtungen zur Handbetätigung aufweisen, oder Maschinenelemente wie Muttern oder Zahnräder.

Die Erfindung wird durch eine Kopplungseinrichtung zur Kopplung der Betätigungselemente von mindestens zwei Aktuatoren weitergebildet. Dabei ist die Kopplungseinrichtung bevorzugt als Hohlrad ausgebildet, welches mit den Betätigungselementen, insbesondere den Zahnrädern, der mehreren Betätigungselemente in Eingriff steht, sodass eine Betätigung des Hohlrades eine Betätigung der mehreren Betätigungselemente bewirkt. Diesem liegt das Prinzip zugrunde, dass die Betätigung einer einzelnen Kopplungseinrichtung mehrere Aktuatoren einer Düsenanordnung insbesondere synchron betätigt. In alternativen Ausführungsbeispielen können die Aktuatoren selbst oder eine Gruppe von Aktuatoren, die auf beliebige Weise gekoppelt sein können, mittels eines motorischen Antriebes, eines Pneumatikantriebes, eines Elektroantriebes, oder eines Linearantriebes einzeln oder in Gruppen betätigt werden.

Gemäß einer bevorzugten Ausführungsform weisen die Betätigungselemente oder die Kopplungseinrichtung einen Antrieb und/oder einen Handhebel auf. Als Antrieb kommt hierbei insbesondere ein Elektromotor, ein pneumatischer Antrieb, oder ein Linearantrieb infrage. Ein Handhebel stellt dabei eine besonders kostengünstige Betätigungsmöglichkeit bereit, die jedoch eine unmittelbare Interaktion eines Bedieners erfordert. Eine Betätigung der Kopplungseinrichtung mittels eines Antriebes ermöglicht es, die Düsenanordnung bezüglich der Betätigung des Regulierelementes zu automatisieren.

Gemäß einer alternativen Ausführungsform ist das Regulierelement als Hülse ausgebildet, wobei die Hülse den Grundkörper zumindest abschnittsweise umgibt und translatorisch in Richtung der Grundkörperlängsachse bewegbar ist, wobei an dem Regulierelement ein Regelabschnitt ausgebildet ist, welcher dazu eingerichtet ist, den freien Strömungsquerschnitt in dem Ringkanalabschnitt zu beeinflussen. Die Ausgestaltung des Regulierelements als Hülse, bzw. hülsenförmiger Körper hat sich dabei ebenfalls als geeignet zur zielgerichteten Beeinflussung des freien Strömungsquerschnitts in dem Ringkanalabschnitt gezeigt. Diese alternative Ausführungsform geht mit einer weiter reduzierten Bauteilanzahl einher und aufgrund der strukturellen Ausbildung des Regulierelements als Hülse lassen sich insgesamt große Kräfte auf den Regelabschnitt des Regulierelements aufbringen.

In einer bevorzugten Ausführungsform erfolgt die translatorische Verschiebung der Hülse mittels einer in den Grundkörper eingebrachten Schraube. Die Hülse weist eine korrespondierende Schraubenaufnahme auf, wobei die Aufnahme eine Ausnehmung zum Einbringen einer Betätigungsmutter aufweist, welche auf die Schraube aufschraubbar ist. Die Betätigungsmutter wird in beide Betätigungsrichtungen der Hülse begrenzt, sodass eine Drehung der Mutter bewirkt, dass sich die Hülse translatorisch in Richtung der Grundkörperlängsachse und in die betreffende Gegenrichtung bewegen lässt. Vorzugsweise sind dabei mindestens drei solcher Betätigungsschrauben in dem Grundkörper angeordnet.

Vorzugsweise ist der Regelabschnitt keilförmig ausgebildet. In alternativen Ausführungsformen kann der Regelabschnitt jedoch auch konkave oder konvexe Abschnitte sowie eine Kombination derselben mit geraden Abschnitten aufweisen. Insbesondere kann die Form des Regelabschnittes auf das zu verarbeitende Material, dessen Viskosität und den gewünschten Durchsatz angepasst werden.

Ferner weist der Regelabschnitt gemäß einer bevorzugten Ausführungsform Stifte auf, welche sich in Abhängigkeit von der Position des Regelabschnittes relativ zu dem Ringkanalabschnitt zumindest abschnittsweise in den Ringkanalabschnitt erstrecken. In einer weiteren alternativen Ausführungsform weist das Regulierelement Stifte auf, welche sich in Abhängigkeit von der Position des Regulierelements zumindest abschnittsweise in den Ringkanalabschnitt erstrecken. Wie bereits ausgeführt, ermöglichen die Stifte eine weitere Verengung des freien Strömungsquerschnitts und damit mittelbar eine auf einen bestimmten Bereich bezogene Druckerhöhung der Schmelze.

Hierbei können die Stifte in unterschiedlichen Ausführungsbeispielen unterschiedliche Längen und Formen aufweisen. Gemäß einem ersten Ausführungsbeispiel ist vorgesehen, dass sich die Stifte im Wesentlichen in den Ringkanalabschnitt erstrecken und darüber hinaus insbesondere in dem Zustand, in dem die Stifte in Richtung der Düsenplatte verfahren sind, zusätzlich zumindest in einen Teilbereich der Strömungskanäle der Düseneinheit. In einem weiteren Ausführungsbeispiel ist vorgesehen, dass geringfügig längere Stifte verwendet werden, welche sich ebenfalls in den Ringkanalabschnitt und in einen größeren Teilbereich der Strömungskanäle der Düseneinheit erstrecken. Hierdurch können die Druckverhältnisse in unmittelbarer Nähe zur Düsenplatte in Abhängigkeit der zu verarbeitenden Schmelze (Viskosität, Durchsatz) zielführend angepasst werden.

In einer bevorzugten Ausführungsform verjüngen sich die Stifte in Richtung der Düsenplatte. In einer alternativen Ausführungsform weisen die Stifte zwei Abschnitte auf, wobei ein erster Abschnitt einen konstanten Durchmesser aufweist und ein zweiter Abschnitt des Stiftes sich in Richtung der Düsenplatte verjüngt. Das der Düsenplatte zugewandte Ende der Stifte ist als Spitze oder als Rundung ausgebildet sein.

Ferner ist gemäß einem Ausführungsbeispiel vorgesehen, dass die Stifte an der der Düsenplatte abgewandten Seite ein Außengewinde aufweisen, welches mit einem Innengewinde, welches in den Regelabschnitt oder das Regulierelement eingebracht ist, korrespondiert. Die Stifte können somit bevorzugt in den Regelabschnitt bzw. das Regulierelement eingeschraubt werden. In einer alternativen Ausführungsform weisen der Regelabschnitt sowie das Regulierelement Bohrungen auf, in welche die Stifte eingebracht werden können.

In einer alternativen Ausführungsform ist vorgesehen, dass die Anzahl der Stifte, die an dem Regelabschnitt bzw. an dem Regulierelement angeordnet werden, variabel ist. So können durch eine gezielte Auswahl der Anzahl der einzubringenden Stifte die Druckverhältnisse in dem Ringkanalabschnitt bzw. in dem Strömungskanal der Düseneinheit zielführend beeinflusst werden.

Gemäß einer alternativen Ausführungsform ist das Strömungsquerschnitts-Regulierelement als ein gegenüber einer Grundkörperlängsachse translatorisch bewegbarer Konus ausgebildet.

Die Verwendung eines translatorisch bewegbaren Konus hat sich als besonders geeignet zur feinfühligen Durchflussregulierung gezeigt und reduziert darüber hinaus Verwirbelungen in dem Fluid.

Vorzugsweise ist dem Konus ein Aktuator zur translatorischen Bewegung des Konus zugeordnet.

Gemäß einer bevorzugten Ausführungsform ist der Aktuator als fluidbetätigter Aktuator ausgebildet, besonders bevorzugt als pneumatischer Aktuator und hydraulischer Aktuator.

Gemäß einer alternativen Ausführungsform ist der Aktuator als mechanischer Aktuator ausgebildet. Eine diesbezügliche Auslegung ist insbesondere dann vorzugswürdig, wenn in einer Fertigungsumgebung kein Druckmedium zur Verfügung steht.

Die Erfindung wird dadurch weitergebildet, dass der mechanische Aktuator einen Gewindestift aufweist, welcher mit einem in dem Konus angeordneten Innengewinde in Eingriff bringbar ist zur translatorischen Bewegung des Konus. Auf diese Weise kann über eine rotatorische Bewegung des Gewindestiftes die Position des Konus feinfühlig und unter Rückgriff auf Standardbauteile verstellt werden. Gemäß einer alternativen Ausführungsform weist der mechanische Aktuator einen Verstellstift auf, welcher über ein Getriebe mit einem Rotationskörper wirkverbunden ist, und wobei der Rotationskörper mittels eines Gewindes mit dem Konus wirkverbunden ist. Mit einer solchen Anordnung lassen sich hohe Rückstellkräfte übertragen, sodass eine solche Düsenanordnung für eine Vielzahl von herrschenden Betriebsdrücken verwendbar ist.

Vorzugsweise ist der translatorisch bewegbare Konus gegenüber dem Grundkörper und/oder der Düsenplatte mittels einer Konusführung geführt und abgedichtet. Somit wird sichergestellt, dass der Konus gleichmäßig und zentriert gegenüber dem Grundkörper und/oder der Düsenplatte geführt ist.

Gemäß einer weiteren bevorzugten Ausführungsform weist der Konus an seiner dem Ringkanalabschnitt zugewandten Seite einen Trapezabschnitt zur Beeinflussung des Strömungsquerschnitts in dem Ringkanalabschnitt auf. Der Konus ist somit dazu eingerichtet, durch den Trapezabschnitt unmittelbar auf die Strömungsverhältnisse im Bereich des Ringkanalabschnitts Einfluss zu nehmen.

Gemäß einer weiteren alternativen Ausführungsform ist der translatorisch bewegbare Konus gegenüber dem Grundkörper und/oder der Düsenplatte mittels eines Faltenbalges abgedichtet, wobei der Faltenbalg dazu eingerichtet ist, den Strömungsquerschnitt in dem Ringkanalabschnitt zu beeinflussen. Vorzugsweise liegt der Faltenbalg in einer ersten Betriebsposition des Konus eng an dessen äußerem Umfang an, wohingegen der Faltenbalg in einer zweiten Position des Konus eine Wölbung erfährt, welche dazu geeignet ist, die Strömungsverhältnisse in dem Ringkanalabschnitt zu beeinflussen.

Die Erfindung wird dadurch weitergebildet, dass die Druckreguliervorrichtung mit einem Düsenkörper gekoppelt ist. Druckreguliervorrichtung und Düsenkörper bilden damit eine Düseneinheit aus.

Gemäß einer alternativen Ausführungsform ist die Druckreguliervorrichtung in einem Düsenkörper ausgebildet. Vorteilhaft wirkt sich hierbei insbesondere aus, dass eine insgesamt kompaktere Anordnung von Druckreguliervorrichtung und Düsenkörper erreicht werden kann.

Gemäß einer alternativ bevorzugten Ausführungsform weist der Düsenkörper eine Führungsanordnung zur Führung des Strömungsquerschnitts-Regulierelements relativ zum Düsenkörper auf. Durch die Führungsanordnung wird das Strömungsquerschnitts-Regulierelement konzentrisch relativ zum Düsenkörper ausgerichtet und geführt. Dabei umfasst die Führungsanordnung vorzugsweise mehrere, insbesondere drei konzentrisch am Düsenkörper angeordnete Führungsplatten, welche das Strömungsquerschnitts-Regulierelement insbesondere an dessen Innenradius oder Außenradius führen.

Gemäß einer weiteren alternativen Ausführungsform weist das Strömungsquerschnitts-Regulierelement wenigstens ein Führungselement zur Führung des Strömungsquerschnitts-Regulierelements relativ zum Düsenkörper auf und der Düsenkörper wenigstens eine Führungsnut, in welcher das wenigstens eine Führungselement beweglich aufgenommen ist. Erneut wird hierdurch eine Ausrichtung und Führung des Strömungsquerschnitts-Regulierelements relativ zum Düsenkörper erreicht.

Gemäß einer weiteren alternativen Ausführungsform weist das Strömungsquerschnitts-Regulierelement Drosselstifte auf, wobei die Drosselstifte in sich nach radial außen erstreckenden Führungen in dem Düsenkörper geführt und aufgenommen sind und sich zumindest abschnittsweise in den Ringkanalabschnitt erstrecken. Vorzugsweise können die Drosselstifte so weit in den Ringkanalabschnitt eingebracht werden, dass dieser nahezu vollständig blockiert wird. Ferner ist bevorzugt, dass die Drosselstifte in eine weitere Position verbracht werden können, bei welcher diese quasi nicht in den Ringkanalabschnitt hineinragen und den freien Strömungsquerschnitt in dem Ringkanalabschnitt somit nicht oder nur geringfügig beeinflussen.

Alternativ ist bevorzugt, dass das Strömungsquerschnitts-Regulierelement wenigstens ein Schieberelement mit wenigstens einer Schieberbohrung aufweist, wobei das Schieberelement in eine Position bringbar ist, in welcher die Schieberbohrung mit Düsenkörper-Strömungskanälen fluchtet und in eine weitere Position, bei der die Schieberbohrung nicht oder nur teilweise mit den Düsenkörper-Strömungskanälen fluchtet.

Bei dieser alternativen Ausführungsform werden Schieber, die Bohrungen aufweisen, dazu verwendet, die Strömung im Bereich der Düsenkörper-Strömungskanäle zu beeinflussen. Ist die Bohrung in den Schieberelementen fluchtend ausgerichtet zu den Düsenkörper-Strömungskanälen, so wird die Strömung durch die Düsenkörper-Strömungskanäle quasi nicht beeinflusst. Werden die Schieberelemente - und somit auch die darin aufgenommenen Schieberbohrungen - aus der Flucht gebracht, so findet eine Beeinflussung der Strömungsverhältnisse in den Düsenkörper-Strömungskanälen statt.

Dabei ist bevorzugt, dass die Schieberelemente mit einer Schieberstange wirkverbunden sind, welche in sich nach radial außen erstreckenden Führungen in den Düsenkörper geführt und aufgenommen sind. Die Schieberstangen sind somit auf einfache Weise von außerhalb des Düsenkörpers zugänglich und betätigbar.

Gemäß einer alternativen Ausführungsform sind die Schieberelemente mit einer rotatorisch beweglichen Schieberverstelleinrichtung gekoppelt. Eine feinfühlige Variation der Position der Schieberelemente wird hierdurch ermöglicht.

Gemäß einer alternativen Ausführungsform ist das Strömungsquerschnitts-Regulierelement als Drosselelement ausgebildet, welches selektiv in den Strömungskanal einschwenkbar ist. Die Erfindung wird dadurch weitergebildet, dass das Drosselelement um eine Drehachse schwenkbar gelagert ist und von einer Einstellschraube in einer Schwenkposition gehalten wird. Die Verwendung solcher Schwenkelemente, welche typischerweise durch den Fluiddruck nach außen und damit vorzugsweise gegen eine Einstellschraube gedrückt werden, hat sich als besonders geeignet zur feinfühligen Einstellung der Strömungsverhältnisse erwiesen. Hierbei ist bevorzugt, dass die Drosselelemente keilförmige Abschnitte, konkave oder konvexe Abschnitte, oder Kombinationen daraus, aufweisen. Die Erfindung ist vorstehend unter Bezugnahme auf eine Düsenanordnung beschrieben worden. In einem weiteren Aspekt betrifft die Erfindung eine Granuliervorrichtung zur Herstellung von Granulat aus einem Schmelzefluss mit einer Düsenanordnung. Die Erfindung löst die eingangs bezeichnete Aufgabe in Bezug auf die Granuliervorrichtung, indem die Düsenanordnung nach einem der obenstehenden Aspekte ausgebildet ist.

In einem weiteren Aspekt betrifft die Erfindung ein Verfahren zur Druckregelung eines Schmelzeflusses in einer Düsenanordnung nach einem der vorstehenden Ausführungsbeispiele oder einer Granuliervorrichtung nach einem der vorstehenden Ausführungsbeispiele. Die Erfindung löst die eingangs bezeichnete Aufgabe unter Bezugnahme auf ein Verfahren, welches die folgenden Schritte aufweist: Bereitstellen eines Schmelzeflusses an einer Druckreguliervorrichtung, Leiten des Schmelzeflusses zu einem Ringkanalabschnitt der Druckreguliervorrichtung und Regulieren des freien Strömungsquerschnitts des Ringkanalabschnitts. In einer alternativen Ausführungsform ist vorgesehen, dass zusätzlich ein Regulieren des freien Strömungsquerschnitts eines Strömungskanals einer Düseneinheit vorgenommen wird.

Bezüglich der Vorteile, die eine solche Granuliervorrichtung bzw. ein solches Verfahren mit sich bringen, sei auf obige Ausführungen verwiesen und selbige hier einbezogen.

Weitere Merkmale und Vorteile der Erfindung ergeben sich aus dem beigefügten Ansprüchen und der nachfolgenden Beschreibung, in der Ausführungsbeispiele anhand schematischer Zeichnungen im Einzelnen erläutert werden. Im Einzelnen zeigen:
- - Fig. 1: ein erstes Ausführungsbeispiel einer erfindungsgemäßen Granuliervorrichtung mit einer erfindungsgemäßen Düsenanordnung in einer perspektivischen Darstellung;
- - Fig. 2: das Ausführungsbeispiel der erfindungsgemäßen Düsenanordnung gemäß Fig. 1 mit einer Düseneinheit sowie einer Druckreguliervorrichtung in einer perspektivischen Darstellung;
- - Fig. 3: das Ausführungsbeispiel einer erfindungsgemäßen Druckreguliervorrichtung gemäß Fig. 1 in einer perspektivischen Darstellung;
- - Fig. 4,5: das Ausführungsbeispiel der erfindungsgemäßen Düsenanordnung gemäß Fig. 1 in Schnittdarstellungen in unterschiedlichen Betriebszuständen;
- - Fig. 6,7: das Ausführungsbeispiel der erfindungsgemäßen Düsenanordnung gemäß Fig. 1 mit Stiften zur Beeinflussung des freien Strömungsquerschnitts in unterschiedlichen Betriebszuständen in Schnittdarstellungen;
- - Fig. 8: ein alternatives Ausführungsbeispiel einer erfindungsgemäßen Düsenanordnung in einer perspektivischen Ansicht;
- - Fig. 9: das Ausführungsbeispiel der erfindungsgemäßen Düsenanordnung aus Fig. 8 in einer Schnittdarstellung;
- - Fig. 10, 11: das Ausführungsbeispiel der erfindungsgemäßen Düsenanordnung gemäß Fig. 8 in unterschiedlichen Betriebszuständen in Schnittansichten;
- - Fig. 12: das Ausführungsbeispiel der erfindungsgemäßen Düsenanordnung aus Fig. 8 mit Stiften zur Beeinflussung des freien Strömungsquerschnitts in einer Schnittansicht;
- - Fig. 13, 14: die erfindungsgemäße Düsenanordnung gemäß Fig. 8 mit Stiften zur Querschnittsbeeinflussung in unterschiedlichen Betriebszuständen in Schnittansichten;
- - Fig. 15: ein drittes Ausführungsbeispiel einer erfindungsgemäßen Düsenanordnung in einer perspektivischen Ansicht;
- - Fig. 16: das Ausführungsbeispiel der erfindungsgemäßen Düsenanordnung gemäß Fig. 15 in einer Schnittansicht;
- - Fig. 17, 18: das Ausführungsbeispiel der erfindungsgemäßen Düsenanordnung gemäß Fig. 15 in unterschiedlichen Betriebszuständen;
- - Fig. 19, 20: das Ausführungsbeispiel der erfindungsgemäßen Düsenanordnung gemäß Fig. 15 mit einer alternativen Ausführung der Stifte zur Beeinflussung des freien Strömungsquerschnitts in unterschiedlichen Betriebszuständen in Schnittansichten
- - Fig. 21: das erste Ausführungsbeispiel einer erfindungsgemäßen Druckreguliervorrichtung gemäß Fig. 1 mit einer alternativen Ausführungsform einer Düseneinheit in einer Schnittansicht;
- - Fig. 22: ein weiteres Ausführungsbeispiel einer erfindungsgemäßen Druckreguliervorrichtung mit einer Düseneinheit in einer perspektivischen Ansicht;
- - Fig. 23: das Ausführungsbeispiel der erfindungsgemäßen Druckreguliervorrichtung gemäß Fig. 22 in einer Schnittansicht;
- - Fig. 24: das Ausführungsbeispiel der erfindungsgemäßen Druckreguliervorrichtung gemäß den Fig. 22 - 23 in einer Schnittansicht während einer alternativen Betriebsposition;
- - Fig. 25: ein an Fig. 1 angelehntes Ausführungsbeispiel einer erfindungsgemäßen Druckreguliervorrichtung mit einem konkav ausgebildeten Regelabschnitt;
- - Fig. 26: das Ausführungsbeispiel einer erfindungsgemäßen Druckreguliervorrichtung gemäß Fig. 25 mit konkav ausgebildetem Regelabschnitt in einer alternativen Betriebsposition;
- - Fig. 27: ein weiteres alternatives Ausführungsbeispiel einer an die in der Fig. 1 gezeigten Ausführungsform angelehnten Druckreguliervorrichtung mit einem konvex ausgebildeten Regelabschnitt;
- - Fig. 28: das Ausführungsbeispiel der erfindungsgemäßen Druckreguliervorrichtung gemäß Fig. 27 in einer alternativen Betriebsposition;
- - Fig. 29: ein alternatives Ausführungsbeispiel einer erfindungsgemäßen Druckreguliervorrichtung sowie einer erfindungsgemäßen Düseneinheit in einer Schnittansicht;
- - Fig. 30: das Ausführungsbeispiel einer erfindungsgemäßen Druckreguliervorrichtung sowie einer erfindungsgemäßen Düseneinheit gemäß Fig. 29 in einer alternativen Betriebsposition;
- - Fig. 31: ein weiteres alternatives Ausführungsbeispiel einer erfindungsgemäßen Druckreguliervorrichtung sowie einer erfindungsgemäßen Düseneinheit in einer Schnittansicht;
- - Fig. 32: das Ausführungsbeispiel der Fig. 31 in einer alternativen Betriebsposition;
- - Fig. 33: ein weiteres alternatives Ausführungsbeispiel einer erfindungsgemäßen Druckreguliervorrichtung sowie einer Düseneinheit in einer Schnittansicht;
- - Fig. 34: das Ausführungsbeispiel gemäß Fig. 33 in einer alternativen Betriebsposition;
- - Fig. 35: ein weiteres alternatives Ausführungsbeispiel einer erfindungsgemäßen Druckreguliervorrichtung sowie einer erfindungsgemäßen Düseneinheit in einer Schnittansicht;
- - Fig. 36: das Ausführungsbeispiel gemäß Fig. 35 in einer alternativen Betriebsposition;
- - Fig. 37: ein weiteres alternatives Ausführungsbeispiel einer erfindungsgemäßen Druckreguliervorrichtung sowie einer alternativen Düseneinheit in einer Schnittansicht;
- - Fig. 38: das Ausführungsbeispiel gemäß Fig. 37 in einer alternativen Betriebsposition;
- - Fig. 39: ein alternatives Ausführungsbeispiel einer erfindungsgemäßen Düseneinheit mit darin integrierter Druckreguliervorrichtung in einer perspektivischen Ansicht;
- - Fig. 40, 41: Schnittansichten der erfindungsgemäßen Düseneinheit mit Druckreguliervorrichtung in Teilschnittdarstellungen in unterschiedlichen Betriebspositionen;
- - Fig. 42: ein weiteres alternatives Ausführungsbeispiel einer erfindungsgemäßen Druckreguliervorrichtung, integriert in eine Düseneinheit, in einer perspektivischen Ansicht;
- - Fig. 43, 44: die erfindungsgemäße Düseneinheit sowie Druckreguliervorrichtung gemäß Fig. 42 in unterschiedlichen Betriebspositionen;
- - Fig. 45: das Ausführungsbeispiel der erfindungsgemäßen Druckreguliervorrichtung, integriert in eine Düseneinheit gemäß Fig. 42 - 44, in einer weiteren Schnittansicht;
- - Fig. 46: ein weiteres alternatives Ausführungsbeispiel einer erfindungsgemäßen Druckreguliervorrichtung mit einer Düseneinheit in einer perspektivischen Darstellung;
- - Fig. 47, 48: das Ausführungsbeispiel der erfindungsgemäßen Druckreguliervorrichtung gemäß Fig. 46 in Schnittansichten in unterschiedlichen Betriebspositionen;
- - Fig. 49, 50: die Teilansichten des Ausführungsbeispiels gemäß den Fig. 46 - 48 in unterschiedlichen Betriebspositionen;
- - Fig. 51, 52: ein alternatives Ausführungsbeispiel einer erfindungsgemäßen Druckreguliervorrichtung in Schnittansichten in unterschiedlichen Betriebspositionen;
- - Fig. 53: ein weiteres Ausführungsbeispiel einer erfindungsgemäßen Düseneinheit mit darin integrierter Druckreguliervorrichtung in einer perspektivischen Darstellung;
- - Fig. 54 - 56: das Ausführungsbeispiel der erfindungsgemäßen Druckreguliervorrichtung gemäß Fig. 53 in verschiedenen perspektivischen Darstellungen und Betriebspositionen;
- - Fig. 57: ein weiteres alternatives Ausführungsbeispiel einer erfindungsgemäßen Druckreguliervorrichtung, angeordnet in einer Düseneinheit, in einer Schnittansicht; und
- - Fig. 58: ein exemplarisches Blockschaltbild einer erfindungsgemäßen Steuerung zum Betrieb einer Druckreguliervorrichtung.

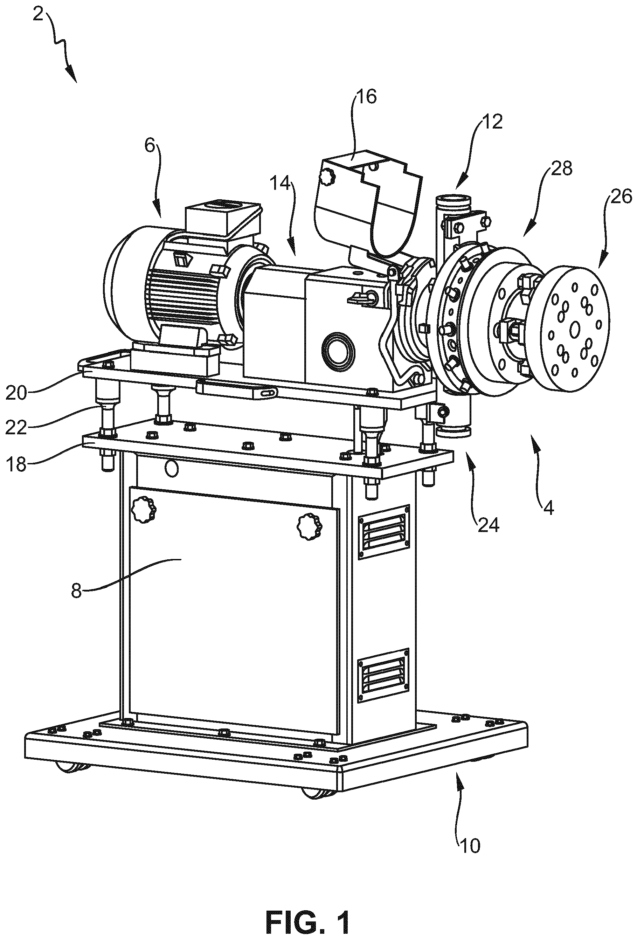

Fig. 1 zeigt eine Granuliervorrichtung 2, welche vorliegend und bevorzugt als Unterwassergranuliervorrichtung ausgebildet ist; allerdings können die erfindungsgemäßen Ausführungsbeispiele auch in anderen Granuliervorrichtungen oder - verfahren zum Einsatz kommen. Die Granuliervorrichtung 2 weist einen Antrieb 6 auf, welcher einem Unterwassergranulator 14 Antriebsleistung bereitstellt. Die Granuliervorrichtung 2 weist ferner eine Schutzhaube 16 auf.

Der Düsenanordnung 4 wird flüssige Kunststoffschmelze typischerweise mittels eines Extruders (in den Figuren nicht gezeigt) zugeführt. Die Düsenanordnung 4 weist eine Druckreguliervorrichtung 26 sowie eine Düseneinheit 28 auf. Die Schmelze wird der Druckreguliervorrichtung 26 zugeführt und in Abhängigkeit vom Material der Schmelze, dessen Viskosität und des vorgesehenen Materialdurchsatzes insbesondere im Hinblick auf den Schmelzedruck reguliert und der Düseneinheit 28 zugeführt. Die Düsenanordnung 4 wird elektrisch oder mittels eines Heizfluids beheizt. Ferner ist Prozesswasser mittels eines Prozesswassereinlasses 24 in die Düsenanordnung 4 einbringbar und kann selbige über den Prozesswasserauslass 12 verlassen. Die Schmelze tritt im Betrieb in Form von Schmelzesträngen (in Fig. 1 nicht gezeigt) aus der Düsenanordnung 4 beziehungsweise der Düseneinheit 28 in Richtung des Unterwassergranulators 14 aus und wird zunächst mittels einer Schneidvorrichtung (nicht gezeigt) in Strangabschnitte zerteilt; die Schneidvorrichtung ist vorzugsweise mit rotierenden Schneidmessern ausgebildet. Diese Schmelzstrangabschnitte treten in dem Unterwassergranulator 14 in Kontakt mit einem Kühlfluid, insbesondere Wasser, und werden abrupt abgekühlt. Die Schmelzestränge werden geschnitten und bilden Granulatkörner, die im weiteren Prozessverlauf aus dem Wasser als Granulate abgeschieden werden.

Der Antrieb 6 dient insbesondere zum Antrieb der Schneidvorrichtung, welche zum Separieren der Schmelzestränge in Strangabschnitte vorgehalten wird. Die Baugruppe aus Antrieb 6, Unterwassergranulator 14 sowie Düsenanordnung 4 mit Düseneinheit 28 und Druckreguliervorrichtung 26 ist auf einem Maschinenträger 20 angeordnet. Dieser wiederum ist mittels der Beabstandungselemente 22 mit einer Grundplatte 18 gekoppelt, welche ihrerseits mit einem Gehäuse 8 verbunden ist. Das Gehäuse 8 wiederum ist auf einen Bodenabschnitt 10, welcher beispielsweise Rollen zur vereinfachten Positionierbarkeit der Granuliervorrichtung 2 aufweist, angeordnet.

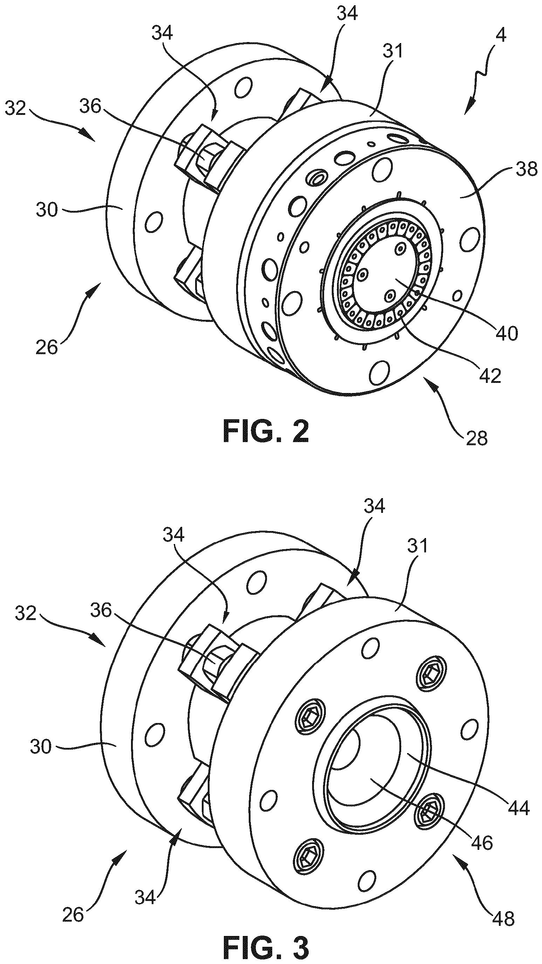

Fig. 2 zeigt die in Fig. 1 gezeigte Düsenanordnung 4 in einem von der Granuliervorrichtung 2 separierten Zustand. Die Düsenanordnung 4 weist die Druckreguliervorrichtung 26 sowie die Düseneinheit 28 auf. Die Düseneinheit 28 enthält einen Düsenkörper 38 sowie eine Düsenplatte 40. Die Düsenplatte 40 weist Düsenlöcher 42 auf, aus denen Schmelzestränge aus der Düseneinheit 28 austreten. Mit der Düseneinheit 28 gekoppelt ist die Druckreguliervorrichtung 26. Die Druckreguliervorrichtung 26 weist einen Grundkörper 30 sowie einen Gehäuseabschnitt 31 auf. Schmelze gelangt an der Fluid-Eintrittsseite 32 in den Grundkörper 30. Der Fig. 2 sind ferner die Aktuatoren 34 zu entnehmen, welche mittels der Betätigungsmuttern 36 eine Beeinflussung des freien Strömungsquerschnittes in einem Teilbereich der Druckreguliervorrichtung 26 und damit mittelbar eine Beeinflussung des Schmelzedruckes ermöglichen.

In der Fig. 3 ist die Druckreguliervorrichtung 26 nunmehr ohne die Düseneinheit 28 gezeigt, wobei die Fluid- Austrittsseite 48 der Druckreguliervorrichtung 26 erkennbar ist. Innerhalb des Grundkörpers 30 der Druckreguliervorrichtung 26 ist ein Strömungskanal 46 ausgebildet. Dieser wird im Bereich der Fluid-Austrittsseite 48 im vorliegenden Ausführungsbeispiel durch eine translatorisch verschiebbare Hülse 44 begrenzt. Durch ein Verschieben der Hülse 44 lässt sich in Zusammenschau mit der hier nicht gezeigten Düseneinheit 28 eine Beeinflussung des freien Strömungsquerschnittes im Bereich der Fluid-Austrittsseite 48 vornehmen, wie in den nachfolgenden Figuren detailliert gezeigt ist.

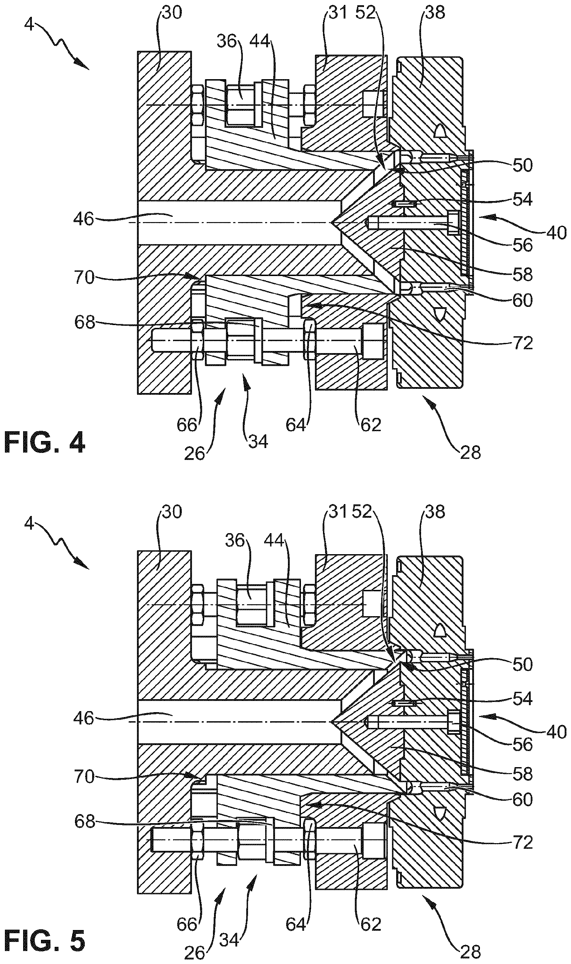

Es zeigen die Fig. 4 bis 5 Schnittansichten der Düsenanordnung gemäß Fig. 2. Die Düsenanordnung 4 weist, wie bereits ausgeführt, die Druckreguliervorrichtung 26 sowie die Düseneinheit 28 auf. Die Düseneinheit 28 besteht vorliegend aus einem Düsenkörper 38, in welchen Düsenkörper-Strömungskanäle eingebracht sind. Diese Düsenkörper-Strömungskanäle 60 sind auf einem Kreisring um die Längsachse des Düsenkörpers 38 angeordnet. An dem Düsenkörper 38 ist ein Leitkonus 58 befestigt. Dieser wird insbesondere durch den Zentrierstift 54 zentriert und mittels einer Konusbefestigungsschraube 56 mit dem Düsenkörper 38 gekoppelt. An der Austrittsseite des Düsenkörpers 38 ist eine Düsenplatte 40 angebracht, welche die Düsenlöcher 42 (vgl. Fig. 2) aufweist, aus welchen Schmelzestränge aus der Anordnung austreten.

Mit der Düseneinheit 28 gekoppelt ist die Druckreguliervorrichtung 26. Dieser weist einen Grundkörper 30 auf, in welchem ein Strömungskanal 46 ausgebildet ist. Vorliegend ist der Strömungskanal 46 relativ zur Längsachse zentriert in der Mitte der Grundkörpers 30 angeordnet. Im Bereich der Austrittsseite der Druckreguliervorrichtung 26 wird durch das Zusammenspiel von Strömungskanal 46 mit dem Leitkonus 58 der Düseneinheit 28 ein Ringkanalanschnitt 50 ausgebildet. Zur Beeinflussung des freien Strömungsquerschnittes in diesem Ringkanalanschnitt 50 ist im Bereich desselben eine Hülse 44 mit einem Regelabschnitt 52 angeordnet. Die Hülse 44 ist translatorisch entlang der Längsachse des Grundkörpers 30 verschiebbar gelagert. Wird die Hülse 44 mit samt des Regelabschnittes 52 in Richtung des Düsenkörpers 38 bewegt, so wird der freie Strömungsquerschnitt in dem Ringkanalabschnitt 50 verengt. Wird jedoch die Hülse 44 in eine Richtung entgegengesetzt zum Düsenkörper 38 bewegt, so wird der freie Strömungsquerschnitt vergrößert, wobei der freie Strömungsquerschnitt jedoch insgesamt nicht größer werden kann, als der durch das Zusammenspiel von Leitkonus 58 mit Grundkörper 30 begrenzte Bereich des Ringkanalabschnittes 50. An der Fluid-Austrittsseite 48 der Druckreguliervorrichtung 26 ist ein Gehäuseabschnitt 31 angeordnet. Dieser verläuft im Wesentlichen ringförmig um den Grundkörper 30 und die Hülse 44. Der Gehäuseabschnitt 31 ist mittels der Schraube 62 zusätzlich mit dem Grundkörper 30 verbunden. Die Schraube 62 ist an ihrem schraubenkopfabgewandten Ende abschnittsweise in den Grundkörper 30 eingeschraubt und mittels der Befestigungsmutter 66 an diesem gesichert. Die vorzugsweise mehreren Schrauben 62 verbinden damit zusätzlich den Grundkörper 30 mit dem Gehäuseabschnitt 31.

In dem Gehäuseabschnitt 31 sind Schrauben 62 aufgenommen, welche wiederum mittels der Befestigungsmuttern 64 an dem Gehäuseabschnitt befestigt sind. Die Hülse 44 weist Bohrungen auf, deren Durchmesser mit dem Durchmesser der Schraube 62 korrespondiert. Darüber hinaus weist die Hülse 44 eine Ausnehmung zum Einbringen einer Betätigungsmutter 36 auf. Die Hülse 44 wird auf die Schrauben 62 aufgebracht und die Mutter 36 auf die Schraube 62 aufgeschraubt. Aufgrund der Form des Aufnahmeabschnittes für die Betätigungsmuttern 36 führt eine Betätigung der Betätigungsmuttern 36 dazu, dass sich die mit der Betätigungsmutter 36 in Anlage stehende Hülse 44 bei Rotation der Betätigungsmutter 36 translatorisch bewegt, wenn der Gehäuseabschnitt 31 fest relativ zu dem Grundkörper 30 angeordnet ist. Somit lässt sich durch Rotation der Betätigungsmutter 36, welche einem Aktuator 34 zugeordnet sind, die Position der Hülse 44 translatorisch einstellen. In Zusammenwirkung mit dem Regelabschnitt 52 der Hülse 44 lässt sich somit der freie Strömungsquerschnitt in dem Ringkanalabschnitt 50 beeinflussen. Durch diese Anpassung des freien Strömungsquerschnittes in dem Ringkanalabschnittes 50 erfolgt eine mittelbare Regulierung des Schmelzedruckes. Der Bewegungsbereich der Hülse 44 wird durch eine erste Begrenzungsschulter 70 sowie durch eine zweite Begrenzungsschulter 72 begrenzt.

Fig. 5 zeigt einen Betriebszustand der Düsenanordnung 4, bei welchem die Hülse 44 translatorisch in Richtung des Düsenkörpers 38 verschoben worden ist. Der freie Störungsquerschnitt 50 ist im unmittelbaren Übergang zu dem Düsenkörper 38 der Düseneinheit 28 nunmehr eingeschränkt. Eine solche Einschränkung des freien Strömungsquerschnitts in dem Ringkanalabschnitt 50 kann beispielsweise zu einer Druckerhöhung der Schmelze im Vergleich zu dem in Fig. 4 gezeigten Zustand verwendet werden.

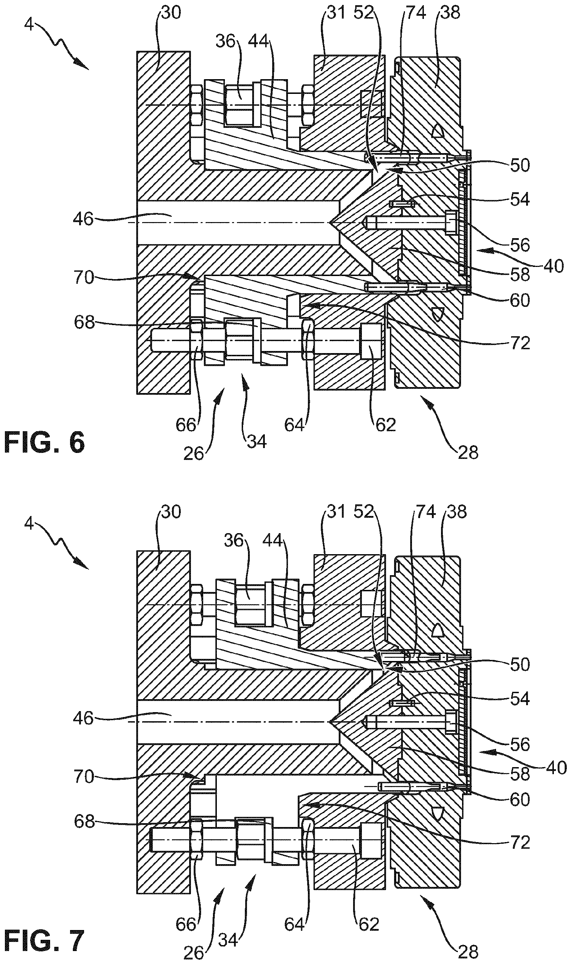

Der Aufbau der Düsenanordnung 4, wie in den Fig. 6 bis 7 gezeigt, orientiert sich grundlegend an dem aus den Fig. 4 und 5 bekannten Aufbau. Allerdings weist die Hülse 44 beziehungsweise der Regelabschnitt 52 der Hülse 44 eine Anzahl von Stiften 74 auf. Neben einer Positionierung des Regelabschnitts 52 bietet nun auch die Positionierung der Stifte 74 eine Möglichkeit den freien Strömungsquerschnitt und somit mittelbar die Druckverhältnisse insbesondere in dem Ringkanalabschnitt 50, aber auch in den Düsenkörper- Strömungskanälen 60, zu beeinflussen. Die Stifte 74 können mit der Hülse 44 beispielsweise verschraubt sein, verklebt sein oder mittels Presspassung in selbige eingebracht werden. Alternativ können Stifte 74 und Hülse 44 einstückig ausgebildet sein. Die Anzahl der Stifte 74 ist insgesamt variabel und kann ebenfalls auf ein zu verarbeitendes Material, eine betreffende Viskosität oder aber einen gewünschten Materialdurchsatz angepasst werden.

Fig. 6 zeigt jenen Zustand, bei welchem sich die Hülse 44 inklusive der Stifte 74 in einer von dem Düsenkörper 38 wegbewegten Position befindet. Der Regelabschnitt 52 beschränkt den freien Störungsquerschnitt in dem Ringkanalabschnitt 50 in dieser Betriebsposition nicht, allerdings sind die Stifte 74 bereits zumindest teilweise in den Ringkanalabschnitt 50 sowie die Düsenkörper-Strömungskanäle 60 eingebracht. Bei dem in der Fig. 7 gezeigten Zustand wurde die Hülse 44 nunmehr in Richtung des Düsenkörpers 38 translatorisch verschoben. Diese hat zur Folge, dass der Regelabschnitt 52 den freien Strömungsquerschnitt in dem Ringkanalabschnitt 50 begrenzt und gleichzeitig die Stifte 74 den freien Strömungsquerschnitt im Bereich des Ringkanalabschnitts 50 sowie zusätzlich im Bereich der Düsenkörper- Strömungskanäle 60 begrenzen.

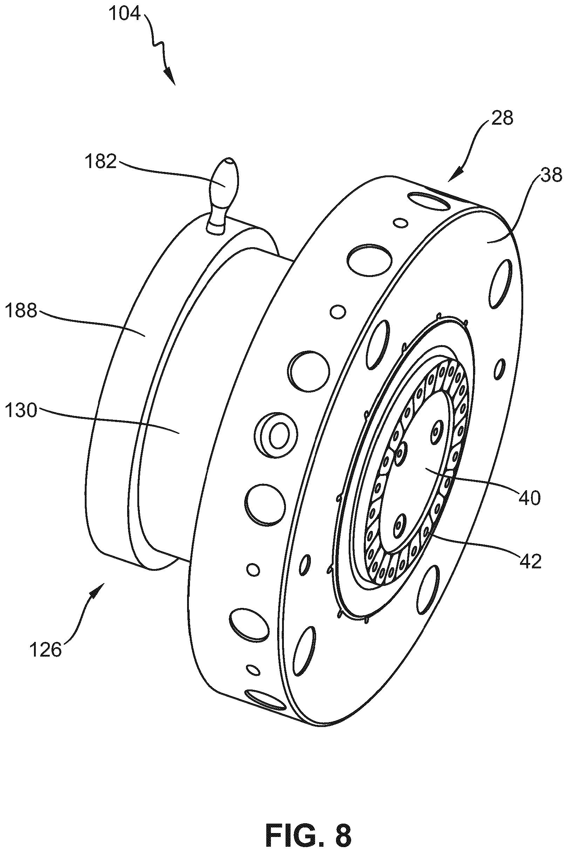

Ein alternatives Ausführungsbeispiel einer Düsenanordnung 104 ist in Fig. 8 gezeigt. Die Düsenanordnung 104 weist ein alternatives Ausführungsbeispiel einer Druckreguliervorrichtung 126 sowie die bereits bekannte Düseneinheit 28 auf. Die Düseneinheit 28 weist einen Düsenkörper 38 sowie eine Düsenplatte 40 mit Düsenlöchern 42 auf. Mit der Düseneinheit 28 verbunden ist die Druckreguliervorrichtung 126. Diese weist einen Grundkörper 130 auf, an welchem eine Kopplungseinrichtung 188 mit einem Handhebel 182 angebracht ist. Eine Bewegung des Handhebels 182 entlang des Umfangs des Grundkörpers 130 führt zu einer Veränderung des freien Strömungsquerschnitts in dem Ringkanalabschnitt 150 beziehungsweise in den Düsenkörper- Strömungskanälen 60, wie den nachfolgenden Figuren detailliert zu entnehmen ist.

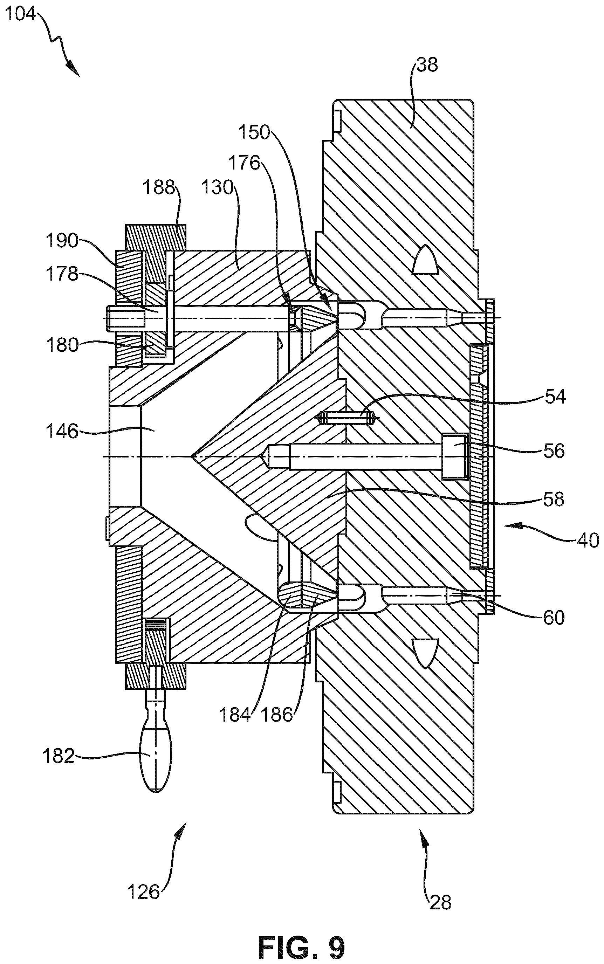

So zeigt Fig. 9 die Druckreguliervorrichtung 126, welche an der Düseneinheit 28 angeordnet ist. Die Druckreguliervorrichtung 126 weist einen Grundkörper 130 auf, in welchem ein Strömungskanal 146 angeordnet ist. Der Strömungskanal 146 bildet in Zusammenschau mit dem Leitkonus 58 der Düseneinheit 28 einen Ringkanalabschnitt 150 aus. In diesem Ringkanalabschnitt 150 ist ein Regulierring 186 angeordnet. Insbesondere durch eine translatorische Bewegung dieses Regulierrings 186 in Richtung der Düseneinheit 28 (bzw. in die Gegenrichtung) lässt sich der freie Strömungsquerschnitt in dem Ringkanalabschnitt 150 beeinflussen.

So führt insbesondere eine Bewegung des Regulierrings 186 in Richtung der Düseneinheit 28 dazu, dass der freie Strömungsquerschnitt in dem Ringkanalabschnitt 150 reduziert wird. Damit lassen sich mittelbar die Druckverhältnisse einer Schmelze in diesem Bereich beeinflussen. Der Regulierring 186 ist an einem Haltering 184 angeordnet. Die betreffenden Bauteile können beispielsweise miteinander verklebt sein, verschraubt sein, oder auf andere Art verbunden sein, gegebenenfalls auch einstückig ausgebildet sein. An dem Haltering 184 ist ein Betätigungselement 176 form- oder kraftschlüssig befestigt. Typischerweise sind an dem Haltering 184 eine Vielzahl von Betätigungselementen 176 befestigt, wobei vorliegend aufgrund der Schnittdarstellung lediglich ein einziger gezeigt ist. Das Betätigungselement 176 wiederum ist verbunden mit einem Stößel 178. Der Stößel 178 weist an seinem dem Haltering 184 gegenüberliegenden Ende einen Gewindeabschnitt auf, auf welchen ein Betätigungselement 180 aufgebracht ist. Der Bewegungsbereich des Betätigungselements 180 wird auf der einen Seite durch den Grundkörper 130 begrenzt sowie auf der anderen Seite durch einen Abschlussring 190. Eine translatorische Bewegung des Betätigungselementes 180 ist damit vorliegend gehemmt. Dieses hat zur Folge, dass eine Rotation des Betätigungselementes 180 dazu führt, dass sich der Stößel 178 translatorisch in Richtung des Düsenkörpers 38 oder von diesem weg bewegt. Da der Regulierring 186 mit dem Stößel 178 mittelbar verbunden ist, bewirkt eine Rotation des Betätigungselementes 180 eine translatorische Bewegung des Regulierrings 186, womit schließlich der freie Strömungsquerschnitt in dem Ringkanalabschnitt 150 regelbar ist.

Wie bereits ausgeführt, weist die Druckreguliervorrichtung 126 vorzugsweise mehrere, insbesondere drei Stößel 178 auf. Um eine gleichmäßige translatorische Bewegung der mehreren Stößel 178 zu vereinfachen, sind die Betätigungselemente 180 bevorzugt als Zahnräder ausgebildet, welche mit einer Kopplungseinrichtung 188, die insbesondere als Hohlrad ausgebildet ist, korrespondieren. Eine Rotation der Kopplungseinrichtung 188 entlang des Umfangs des Grundkörpers 130 führt dazu, dass die mehreren Betätigungselemente 180 gleichmäßig bewegt werden, womit sichergestellt werden kann, dass der Regulierring 186 gleichmäßig und möglichst rein translatorisch in Richtung des Düsenkörpers 38 oder von diesem weg bewegt wird. An der Kopplungseinrichtung 188 ist vorliegend ein Handhebel 182 zur Erleichterung einer manuellen Betätigung der Kopplungseinrichtung 188 angeordnet.

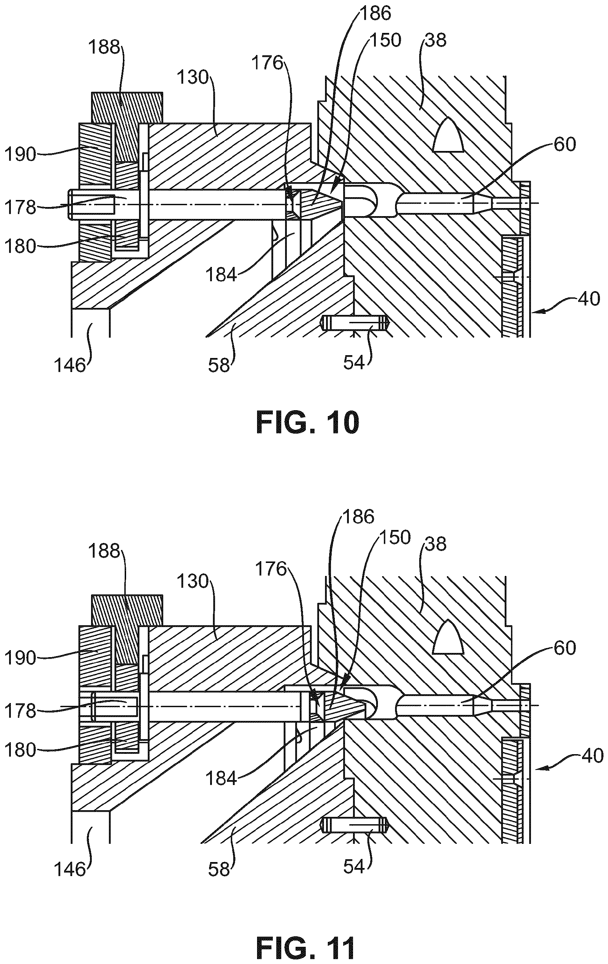

In den Fig. 10 und 11 sind unterschiedliche Betriebszustände der Düsenanordnung 104 aus der Fig. 9 gezeigt. In der Fig. 10 ist ein Betriebszustand gezeigt, bei dem der Regulierring 186 weitestmöglich in eine Richtung entgegengesetzt zum Düsenkörper 38 verfahren worden ist. Der freie Strömungsquerschnitt in dem Ringkanalabschnitt 150 ist damit maximal. Im Gegensatz dazu ist in Fig. 11 jener Zustand gezeigt, bei dem der Regulierring 186 weitestmöglich in Richtung des Düsenkörpers 38 verfahren worden ist. In diesem Betriebszustand wird der freie Strömungsquerschnitt in dem Ringkanalabschnitt 150 minimal. Es ist jedoch vorgesehen, dass stets ein gewisser freier Strömungsquerschnitt zwischen Regulierring 186 und Ringkanalabschnitt 150 verbleibt.

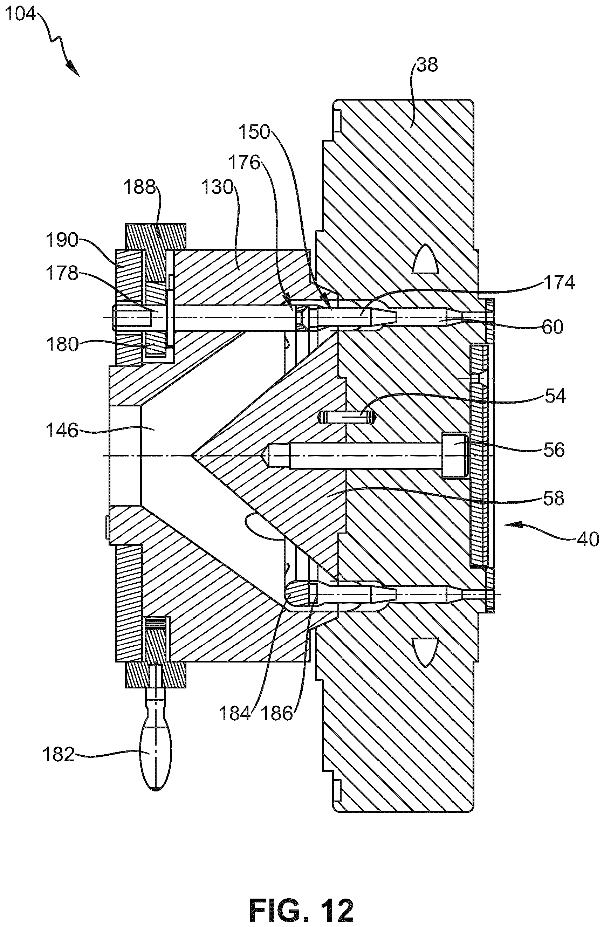

Fig. 12 zeigt die Düsenanordnung der Fig. 8 bis 11, wobei jedoch an dem Regulierring 186 Stifte 174 zur Beeinflussung des freien Querschnitts in dem Ringkanalabschnitt 150 beziehungsweise in den Düsenkörper-Strömungskanälen 60 angeordnet sind. Die Stifte 174 können auf unterschiedliche Art und Weisen mit dem Haltering 184 beziehungsweise dem Regulierring 186 verbunden sein. Beispielsweise können die Bauteile verschraubt, verklebt, anderweitig verbunden, oder einstückig ausgebildet sein. Darüber hinaus ist die Anzahl der Stifte 174 variabel und auch deren Geometrie und Länge. Bezugnehmend auf die Fig. 12 führt nun eine Betätigung der Kopplungseinrichtung 188 dazu, dass das Betätigungselement 180 ebenfalls rotiert. Da das Betätigungselement 180 durch den Grundkörper 130 sowie den Abschlussring 190 in seiner Position gehalten wird, führt eine Rotation des Betätigungselementes 180 dazu, dass der Stößel 178 translatorisch bewegt wird, je nach Drehrichtung in Richtung des Düsenkörpers 38 oder von diesem weg.

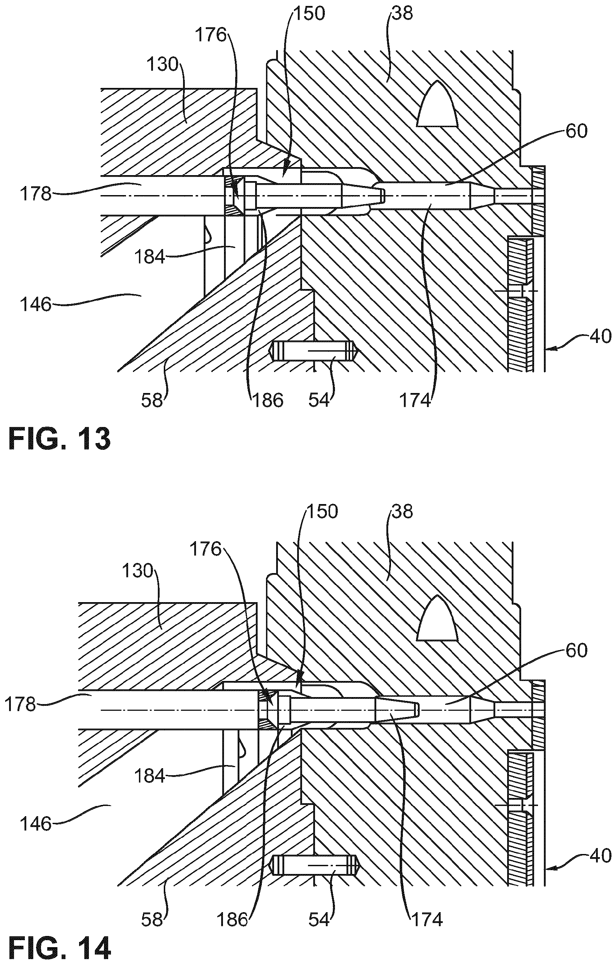

Da an dem Haltering 184 beziehungsweise dem Regulierring 186 vorliegend mehrere Stifte 174 angeordnet sind, werden diese gleichsam in Richtung des Ringkanalabschnittes 150 sowie in Richtung der Düsenkörper- Strömungskanäle 60 bewegt oder von diesen weg bewegt. Die Stifte 174 ermöglichen insbesondere eine weitere Reduzierung des freien Strömungsquerschnittes in dem Ringkanalabschnitt 150 sowie insbesondere in den Düsenkörper- Strömungskanälen 60 damit eine zielgerichtete Beeinflussung des Schmelzedruckes in einem Bereich in unmittelbarer Nähe zu der Düsenplatte 40. Die eben genannten Betriebszustände sind in den Fig. 13 und 14 verdeutlicht. In Fig. 13 wurde der Regulierring 186 samt Stift 174 von dem Düsenkörper 38 wegbewegt, wohin gehend in der Fig. 14 die eben genannten Bauteile maximal in Richtung des Düsenkörpers 38 bewegt worden sind. Wie insbesondere Fig. 14 zu entnehmen ist, führen die Stifte 174 dazu, dass die Düsenkörper-Strömungskanäle 60 durch die Stifte 174 nahezu vollständig ausgefüllt werden womit der verbleibende freie Strömungsquerschnitt in den Düsenkörper-Strömungskanälen 60 minimal wird.

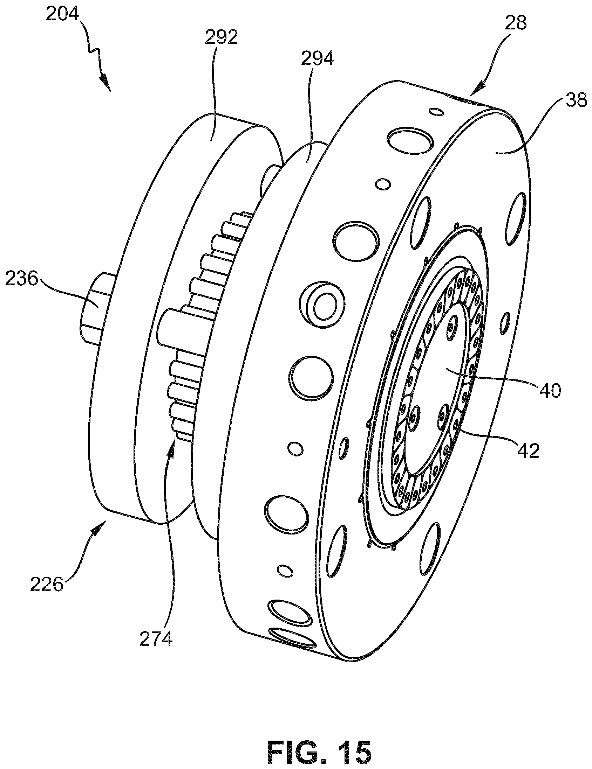

Ein weiteres Ausführungsbeispiel einer Düsenanordnung 204 ist in Fig. 15 gezeigt. Die Düsenanordnung 204 weist eine Druckreguliervorrichtung 226 sowie eine Düseneinheit 28 auf. Die Düseneinheit 28 weist einen Düsenkörper 38 sowie eine Düsenplatte 40 mit Düsenlöchern 42 auf. An dieser Düseneinheit 28 ist die Druckreguliervorrichtung 226 angeordnet, welche einen Aufnahmering 292, einen Verbindungsring 294 sowie Stifte 274 aufweist. Darüber hinaus weist die Druckreguliervorrichtung eine Betätigungsmutter 236 auf. Vorzugsweise befinden sich mehrere Betätigungsmuttern 236 an der Druckreguliervorrichtung 226, insbesondere drei Betätigungsmuttern 236.

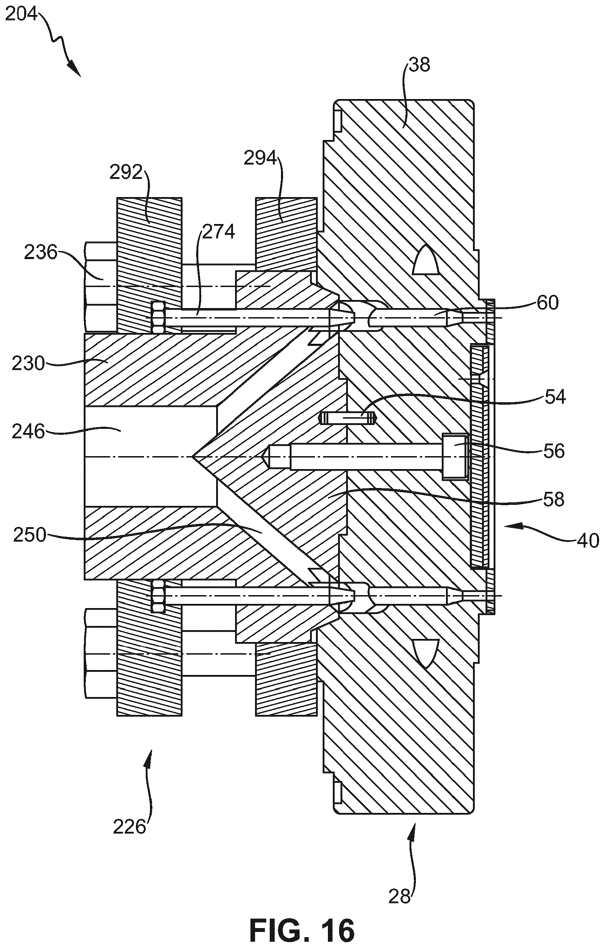

Der Aufbau der Druckreguliervorrichtung 226 kann den Fig. 16 bis 20 entnommen werden. Die Druckreguliervorrichtung 226 weist einen Grundkörper 230 auf, in welchem ein Strömungskanal 246 ausgebildet ist. In Zusammenschau mit dem Leitkonus 58 der Düseneinheit 28 ist in einem Bereich zwischen Druckreguliervorrichtung 226 und Düseneinheit 28 ein Ringkanalabschnitt 250 ausgebildet. In den Ringkanalabschnitt 250 hinein ragen mehrere Stifte 274, welche translatorisch in Richtung der Düseneinheit 28 oder von dieser wegbewegt werden können. Die Stifte 274 werden abschnittsweise in dem Grundkörper 230 geführt und sind mit ihrem Kopf in einem Aufnahmering 292 gelagert. Eine translatorische Bewegung des Aufnahmerings 292 bewirkt damit ebenfalls eine translatorische Bewegung der Stifte 274. Der Aufnahmering 292 ist mittels einer, vorzugsweise mehrerer, Betätigungsmutter 236 mit dem Grundkörper 230 sowie mit dem Verbindungsring 294 verbunden.

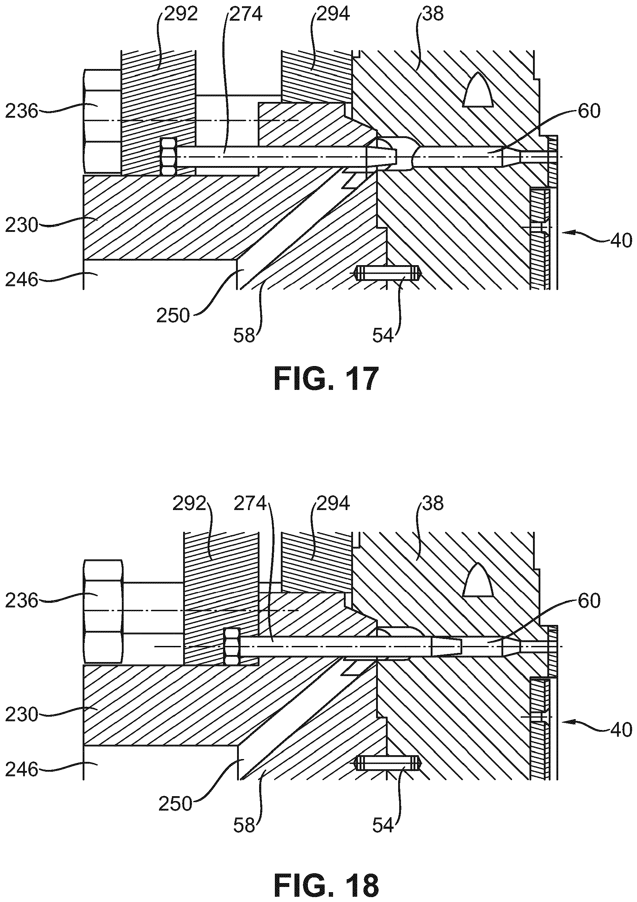

Vorliegend bewirkt eine Rotation der Betätigungsmutter 236, dass sich der Aufnahmering 292, je nach Rotationsrichtung, translatorisch in Richtung der Düseneinheit 28 oder von dieser wegbewegt. Da die Stifte 274 in dem Aufnahmering 292 aufgenommen sind, werden diese analog translatorisch bewegt. Somit ist es durch Betätigung, bzw. Rotation der Betätigungsmuttern 236 möglich, die Stifte 274 translatorisch in den Ringkanalabschnitt 250 bzw. in die Düsenkörper-Strömungskanäle 60 hinein zu bewegen und diese aus diesen hinaus zu bewegen. Die unterschiedlichen Betriebszustände der Düsenanordnung 204 sind den Fig. 17 bis 18 zu entnehmen. Bei dem in der Fig. 17 gezeigten Zustand sind die Stifte 274 maximal von dem Düsenkörper 38 wegbewegt worden. Die Stifte 274 reichen damit lediglich in den Bereich des Ringkanalabschnitts 250 sowie geringfügig in die Düsenkörper-Strömungskanäle 60 hinein. Es verbleibt ein größerer freier Strömungsquerschnitt im Bereich des Ringkanalabschnittes 250 bzw. der Düsenkörper-Strömungskanäle 60. Bei dem in der Fig. 18 gezeigten Zustand wurden die Stifte 274 maximal in Richtung des Düsenkörpers 38 translatorisch verfahren. Wie aus der Fig. 18 zu entnehmen ist, ist der verbleibende freie Strömungsquerschnitt, insbesondere in den Düsenkörper-Strömungskanälen 60 nunmehr minimal.

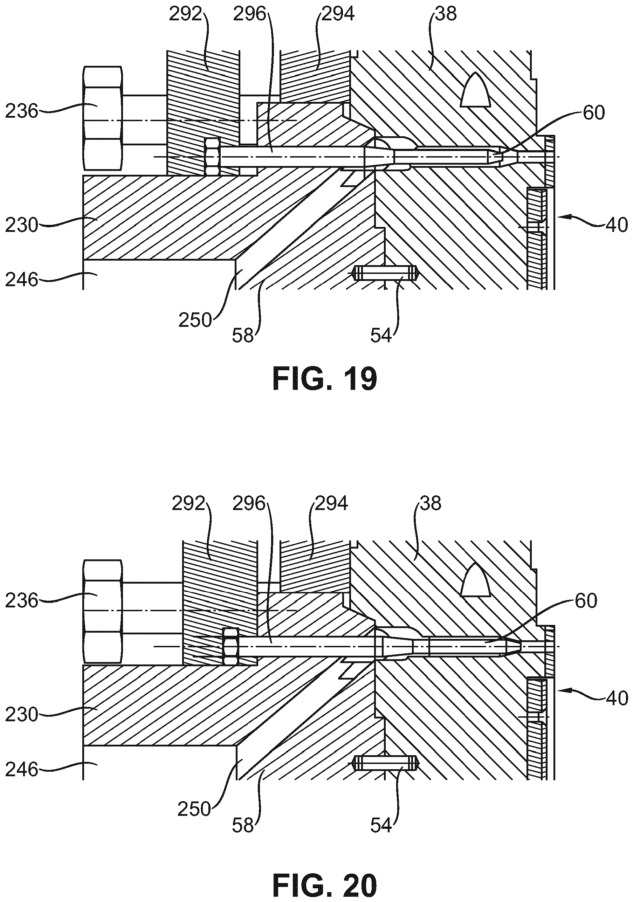

Die Fig. 19 und 20 zeigen alternative Ausführungsbeispiele bezüglich der Ausgestaltung der Stifte 296. Die Stifte 296 sind gegenüber den vorherigen Ausführungsbeispielen nunmehr verlängert. Dementsprechend reichen die Stifte 296 je nach Betriebszustand weiter insbesondere in die Düsenkörper-Strömungskanäle 60 hinein, wodurch sich der freie Strömungsquerschnitt und damit mittelbar der Schmelzedruck in unmittelbarer Nähe zu der Düsenplatte 40 beeinflussen lässt.

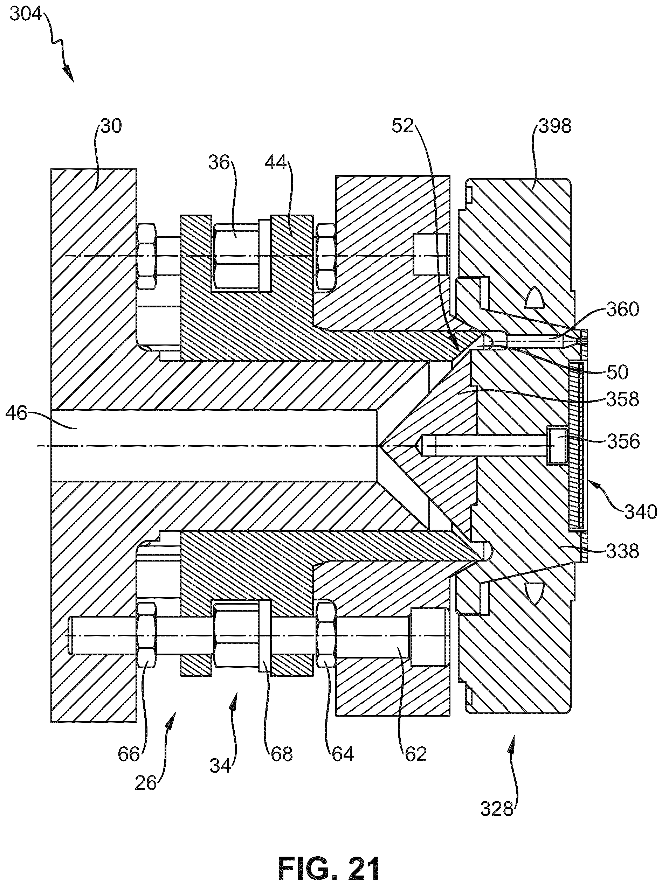

In Fig. 21 ist ein abschließendes Ausführungsbeispiel einer Düsenanordnung 304 gezeigt. Die Düsenanordnung 304 setzt sich zusammen aus der in den Fig. 2 bis 5 gezeigten Druckreguliervorrichtung 26 mit einem alternativen Ausführungsbeispiel einer Düseneinheit 328. Von einer detaillierten Beschreibung der Druckreguliervorrichtung 26 wird vorliegend abgesehen und es wird auf obige Ausführung verwiesen. Die alternative Ausgestaltung der Düseneinheit 328 ist durch einen Düsenkörper 338 gekennzeichnet, in welchem auf bekannte Art und Weise Düsenkörper-Strömungskanäle 360 ausgebildet sind. Ferner ist an dem Düsenkörper 338 ein Leitkonus 358 angeordnet, welcher mit einer Konusbefestigungsschraube 356 an dem Düsenkörper 338 angeordnet ist. Um den Düsenkörper 338 herum ist vorliegend ein Heizkranz 398 angeordnet, der einem Beheizen der Düseneinheit 328 dient. Hierbei wird deutlich, dass die Druckreguliervorrichtung 26 mit einer Vielzahl von Düseneinheiten 328 kombinierbar ist. Dabei kann die Düseneinheit als zweiteilige Düseneinheit, wie in der Fig. 21 beschrieben, oder als einteilige Düseneinheit, wie in den Fig. 1 bis 20 beschrieben, ausgebildet sein. Die Düseneinheit kann darüber hinaus auf vielfache Weise beheizt sein, beispielsweise mittels elektrischen Stroms, eines Heizfluids oder Dampf und dergleichen mehr.

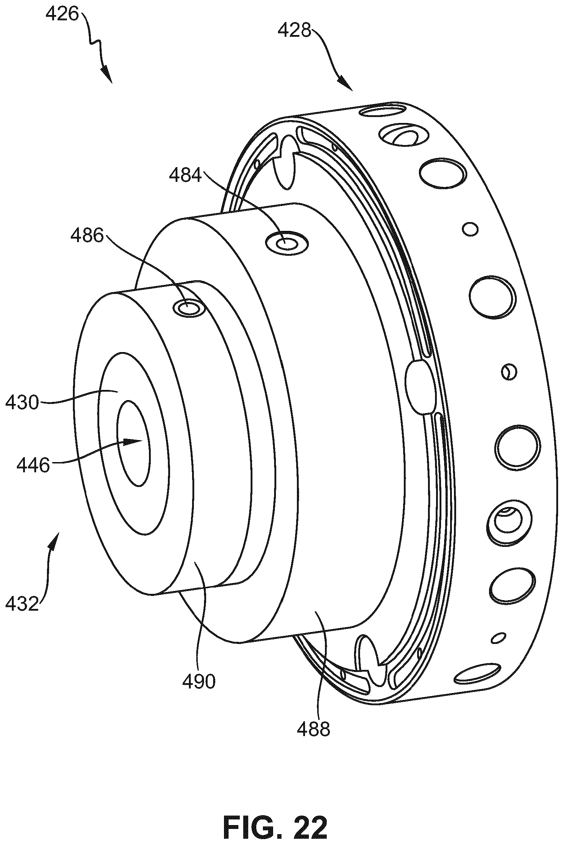

Fig. 22 zeigt eine Düseneinheit 428 sowie eine an der Düseneinheit angeordnete Druckreguliervorrichtung 426. Die Druckreguliervorrichtung 426 weist eine Fluid-Eintrittsseite 432 auf, an welcher Fluid mittels des Strömungskanals 446 in die Druckreguliervorrichtung 426 gelangen kann. Die Druckreguliervorrichtung 426 weist ferner einen Grundkörper 430 auf, an welchem ein erster Gehäusering 488 sowie ein zweiter Gehäusering 490 angeordnet sind. In dem ersten Gehäusering 488 ist ein Ein/Auslass für Druckfluid 484 angeordnet. Ein zweiter Ein/Auslass für Druckfluid 486 ist an dem zweiten Gehäusering 490 angeordnet.

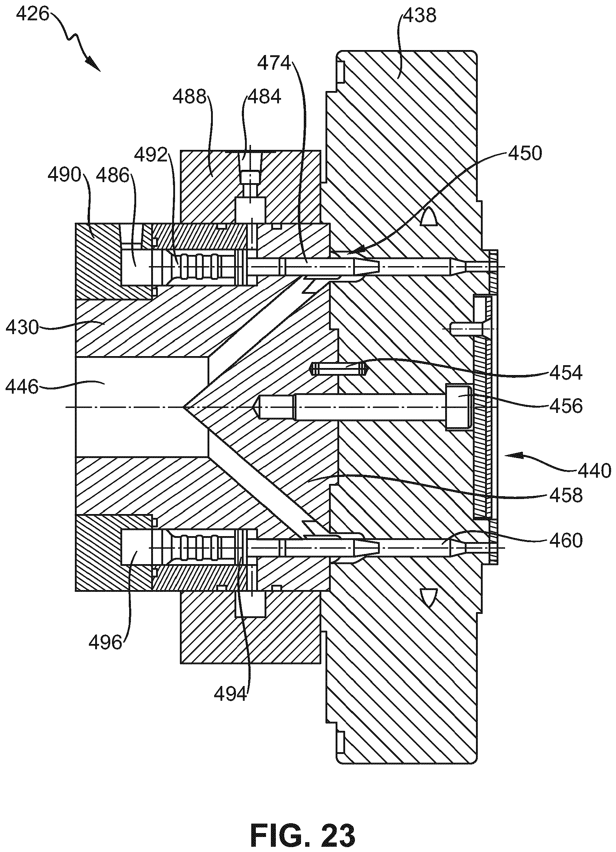

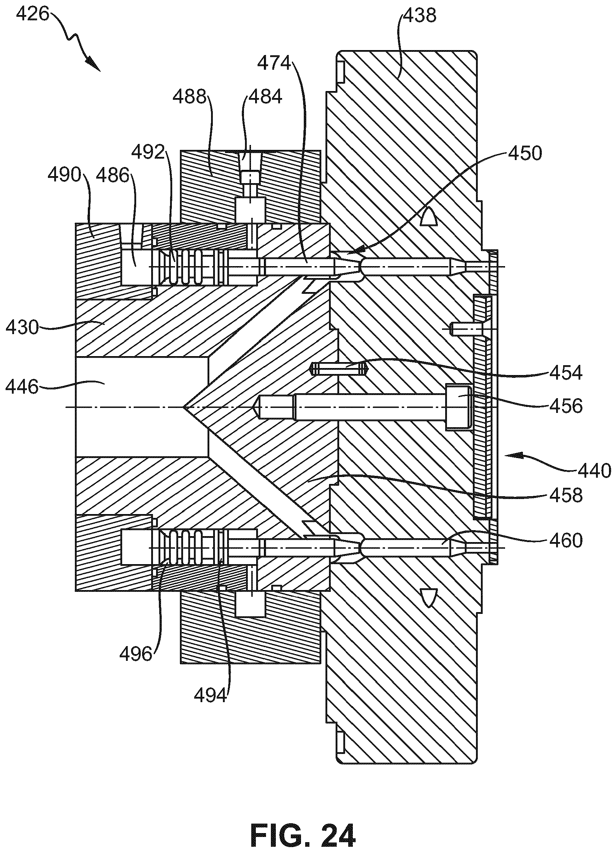

Das Funktionsprinzip ist anhand der Fig. 23 sowie 24 veranschaulicht. Wie Fig. 23 entnehmbar ist, sind die Ein/Auslässe für Druckfluid 484, 486 mit einem Zylinderraum 496 verbunden, welcher in dem zweiten Gehäusering 490 angeordnet ist. In dem Zylinderraum 496 ist ferner ein Kolben 494 angeordnet, welcher mit Stiften 474 verbunden ist. Zur Abdichtung des Kolbens 494 wird ein Faltenbalg 492 verwendet. Wird nun Druckfluid über den Ein/Auslass für Druckfluid 486 in den Zylinderraum 496 eingebracht, so bewirkt dieses, dass der Kolben 494 in Zeichnungsebene nach rechts verschoben wird. Aufgrund der unmittelbaren Kopplung zwischen Kolben 494 und Stift 474 bewirkt dieses, dass der Stift 474 bzw. die mehreren Stifte 474 zumindest partiell in die Düsenkörper-Strömungskanäle 460 eingefahren werden. Durch die Positionierung der Stifte 474 relativ zu dem Zylinderraum 496 erfolgt eine Regulierung des Strömungsquerschnittes in den Düsenkörper-Strömungskanälen 460 sowie in dem Ringkanalabschnitt 450.

Wie in Fig. 23 gezeigt, weist der Düsenkörper 438 eine Düsenplatte 440 auf und ist mittels einer Konusbefestigungsschraube 456 sowie eines Zentrierstiftes 454 mit einem Leitkonus 458 verbunden.

In der Fig. 24 ist ein Betriebszustand der Druckreguliervorrichtung 426 gezeigt, in welchem sich die Stifte 474 in einem im Vergleich zu Fig. 23 weniger den Ringkanalabschnitt 450 verengenden Zustand befinden. Ein Bewegen des Kolbens 494 nach links - in Zeichnungsebene gesehen - kann insbesondere dadurch erfolgen, dass Druckfluid über einen Ein/Auslass für Druckfluid 484 in den Zylinderraum 496 auf der dem Faltenbalg 492 abgeneigten Seite des Kolbens 494 eingebracht wird. Unter der Voraussetzung, dass Druckfluid aus dem Ein/Auslass 486 ausströmen kann, führt ein Einbringen von Druckfluid über den Ein/Auslass 484 dazu, dass sich der Kolben 494 in Zeichnungsebene nach links bewegt und die mit dem Kolben 494 gekoppelten Stifte 474 nach links bewegt werden und somit zumindest teilweise aus dem Ringkanalabschnitt 450 und den Düsenkörper-Strömungskanälen 460 hinausbewegt werden.

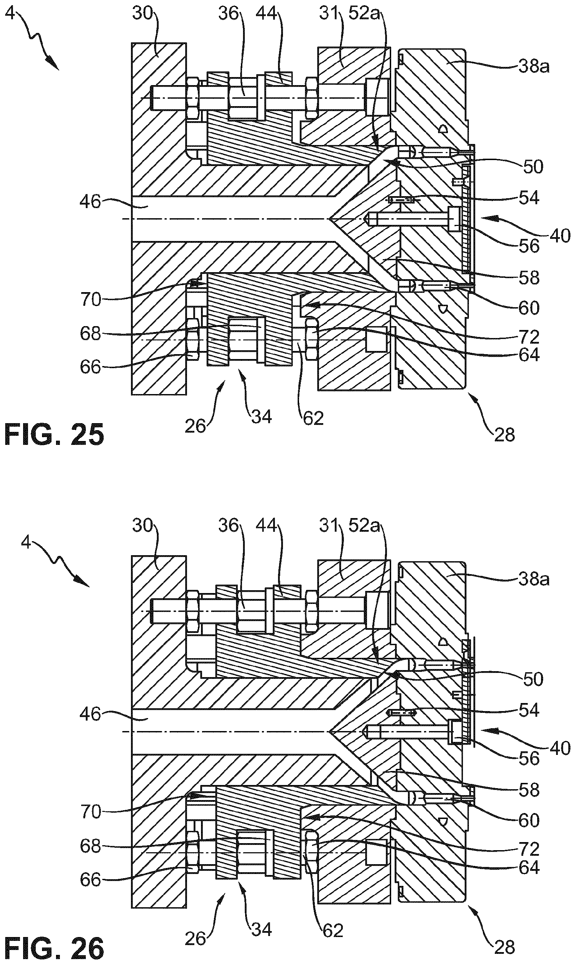

Die Fig. 25 sowie 26 zeigen alternative Ausführungsformen der bereits mit Bezug auf die Fig. 4 und 5 beschriebenen Düsenanordnung 4. Das in den Fig. 25 und 26 gezeigte Ausführungsbeispiel unterscheidet sich von dem in den Fig. 4 - 5 gezeigten insbesondere durch die Form des Regelabschnittes 52a, der in den Fig. 25 und 26 konkav ausgebildet ist, sowie durch die Form des Düsenkörpers 38a, der in den Fig. 25 und 26 über eine im Bereich des Ringkanalabschnittes 50 konvexe Ausbildung des Strömungskanals verfügt.

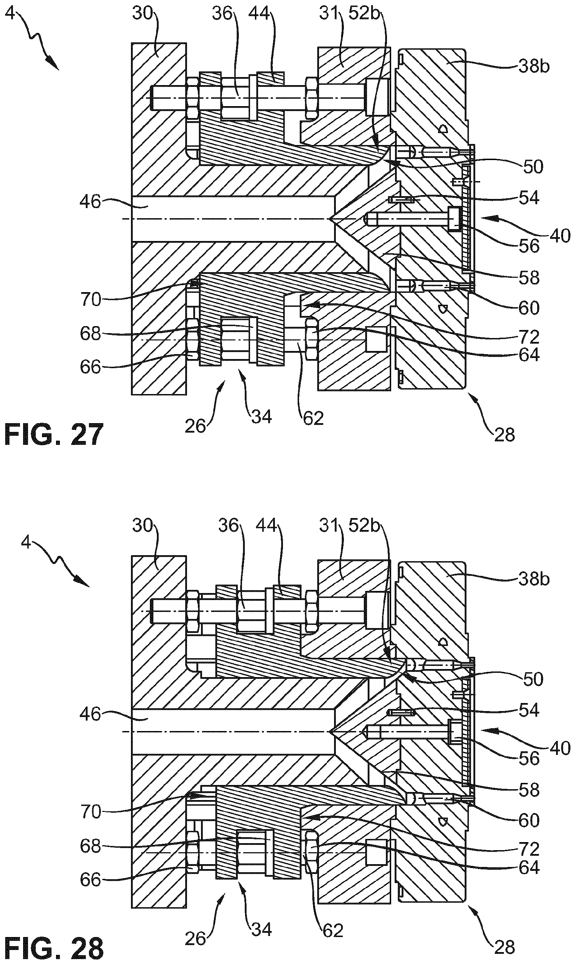

Die Fig. 27 sowie 28 zeigen ein weiteres alternatives Ausführungsbeispiel eines Regelabschnittes 52b sowie Düsenkörpers 28b. In den Fig. 27 sowie 28 ist der Regelabschnitt 52b nunmehr konvex ausgebildet. Der Düsenkörper 38b ist korrespondierend im Bereich des Regelabschnittes 52b konkav ausgebildet. Im Übrigen sei auf die Figurenbeschreibung zu den Fig. 4 - 5 verwiesen.

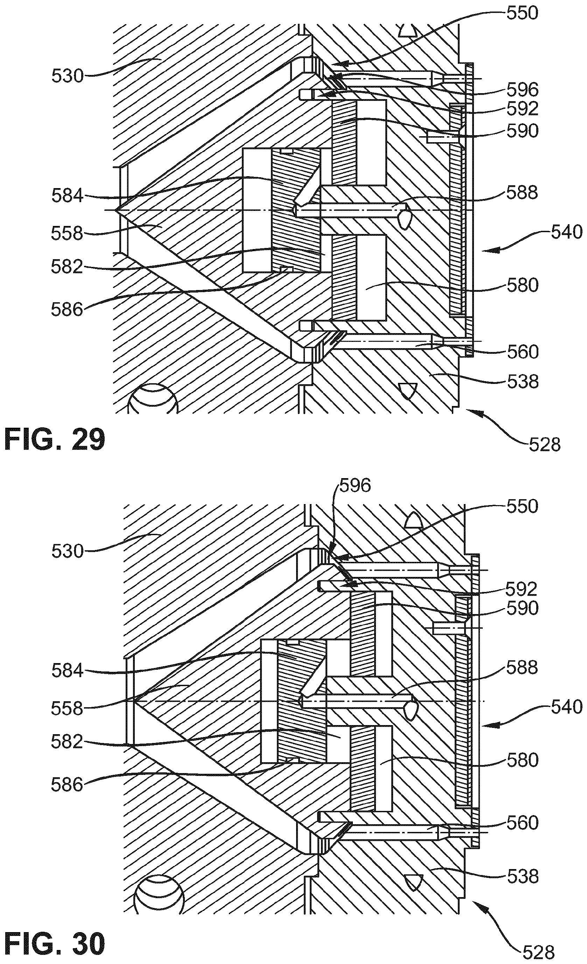

Die Fig. 29 sowie 30 zeigen ein weiteres alternatives Ausführungsbeispiel einer Düseneinheit 528. Die Düseneinheit 528 weist einen Düsenkörper 538 auf, der mit einem weiteren Grundkörper 530 verbunden ist. Der Grundkörper 530 bildet in Zusammenschau mit einem axial verstellbaren Leitkonus 558 einen Ringkanalabschnitt 550 aus. Der freie Strömungsquerschnitt in dem Ringkanal 550 lässt sich durch eine translatorische Bewegung des axial verstellbaren Leitkonus 558 relativ zu dem Grundkörper 530 beeinflussen. Die axiale Verstellbarkeit des Leitkonus 558 wird wie folgt erreicht. Der axial verstellbare Leitkonus 558 ist zunächst mittels einer Konusführung 592 gegenüber dem Düsenkörper 538 translatorisch beweglich geführt. Die Verstellung des Leitkonus 558 erfolgt vorliegend auf fluidische Art. Zu diesem Zweck ist der Düsenkörper 538 so ausgebildet, dass dieser in Zusammenschau mit einem Druckkammerring 590 eine erste Druckkammer 580 ausbildet. Wird Druckfluid in die erste Druckkammer 580 eingebracht, so wird der axial verstellbare Leitkonus 558 auf diese Weise in Zeichnungsebene nach links bewegt.

In dem Leitkonus 558 ist darüber hinaus eine zweite Druckkammer 582 ausgebildet, welche mittels eines Dichtringes 586 gegenüber einem Verteilerabschnitt 854 abgedichtet ist. Wird nun Druckfluid mittels des Ein/Auslasses 588 in die zweite Druckkammer 582 eingebracht, hat dies zur Folge, dass sich der axial verstellbare Leitkonus 558 in Zeichnungsebene gesehen nach rechts bewegt und der freie Strömungsquerschnitt im Bereich des Ringkanalabschnittes 550 verkleinert wird. Auf dieselbe Weise führt ein Einbringen von Druckfluid in die erste Druckkammer 580 dazu, dass der axial verstellbare Leitkonus 558 nunmehr in Zeichnungsebene gesehen nach rechts verschoben wird. Dieses hat zur Folge, dass der freie Strömungsquerschnitt im Bereich des Ringkanalabschnittes 550 vergrößert wird. Der Konus 558 weist an seiner dem Ringkanalabschnitt 550 zugewandten Seite einen Trapezabschnitt 596 zur Beeinflussung des Strömungsquerschnitts in dem Ringkanalabschnitt 550 auf.

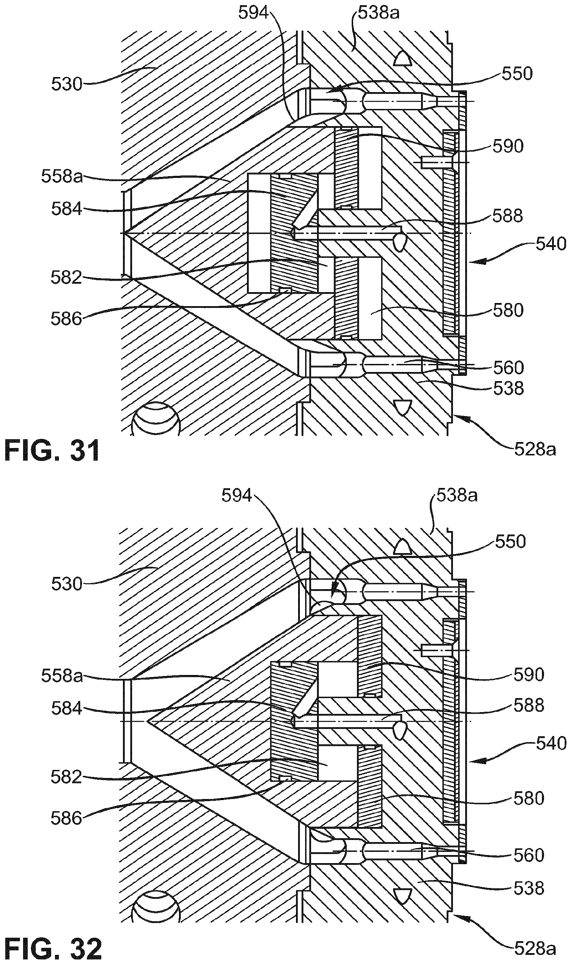

Eine alternative Ausführungsform einer Düseneinheit 528a, welche ebenfalls das Grundprinzip eines axial verstellbaren Leitkonus 558a verwirklicht, ist in den Fig. 31 und 32 gezeigt. Zwischen dem axial verstellbaren Leitkonus 558a und der Düseneinheit 538a ist ein Faltenbalg 594 angeordnet. Befindet sich der axial verstellbare Leitkonus, wie in Fig. 31 gezeigt, in einem ausgefahrenen Zustand, bei dem der axial verstellbare Leitkonus 558a in Zeichnungsebene nach links bewegt worden ist, so liegt der Faltenbalg 594 eng an einem Übergangsbereich zwischen dem axial verstellbaren Leitkonus 558a und dem Düsenkörper 538a an. Mithin wird der freie Strömungsquerschnitt des Ringkanalabschnittes 550 durch den Faltenbalg 594 nicht verengt.

Bei dem in Fig. 32 gezeigten Zustand hingegen befindet sich der axial verstellbare Leitkonus 558a in einem eingefahrenen Zustand, das heißt in einem in Zeichnungsebene gegenüber der Fig. 31 nach rechts bewegten Zustand. Befindet sich der axial verstellbare Leitkonus 558a in dem betreffenden Zustand, so erfährt der Faltenbalg 594 eine Stauchung, die dazu führt, dass sich selbiger in den Bereich des Ringkanalabschnittes wölbt. Dieses wiederum bewirkt im Bereich des Ringkanalabschnittes 550 eine Reduzierung des freien Strömungsquerschnittes.

Eine weitere Anpassung des freien Strömungsquerschnittes in dem Bereich zwischen Grundkörper 530 und axial verstellbarem Leitkonus 558a erfolgt zusätzlich durch die translatorische Verschiebung des Leitkonus 558a gegenüber dem Grundkörper 530.

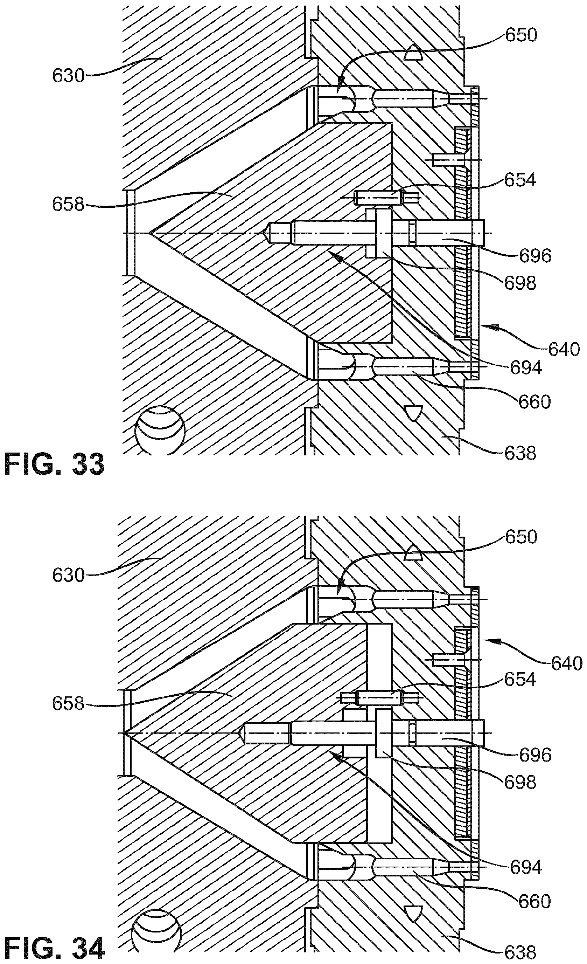

Eine alternative mechanische Verstelleinrichtung zur axialen Verstellung eines Leitkonus 658 ist in den Fig. 33 sowie 34 gezeigt. Der Leitkonus 658 ist zunächst in dem Düsenkörper 638 axial verstellbar geführt. Der Düsenkörper 638 weist darüber hinaus im Bereich seiner Längsachse eine Bohrung auf, in die ein Gewindestift 696 eingelassen ist.

Der Gewindestift 696 ist von außerhalb der Vorrichtung, insbesondere von Seiten der Düsenplatte 640 von außen betätigbar. Auf den Gewindestift 696 ist eine Mutter 698 aufgebracht. Darüber hinaus verfügt der axial verstellbare Leitkonus 658 über eine im Bereich seiner Längsachse angeordnete Bohrung, die ihrerseits ein Innengewinde aufweist, in welches ein auf den Gewindestift 696 aufgebrachtes Außengewinde eingreifen kann. Eine Verdrehbarkeit des axial verstellbaren Leitkonus 658 wird durch einen Zentrierstift 654 gehemmt, sodass eine Rotation des Gewindestiftes 696 zur Folge hat, dass der axial verstellbare Leitkonus in Abhängigkeit von der Drehrichtung eine translatorische Bewegung in Axialrichtung erfährt. Je nach Axialposition des Leitkonus 658 wird der Strömungsquerschnitt zwischen dem Leitkonus 658 und dem Grundkörper 630 beeinflusst.

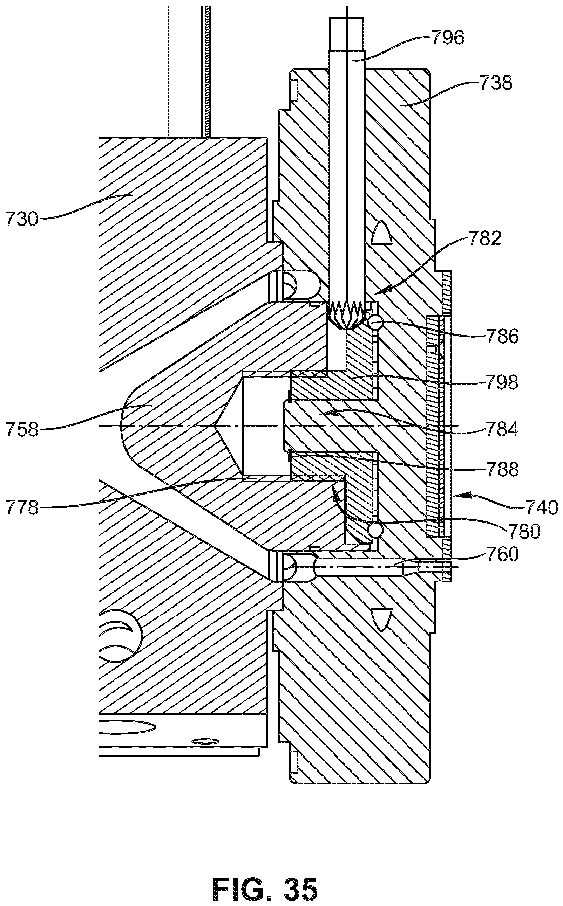

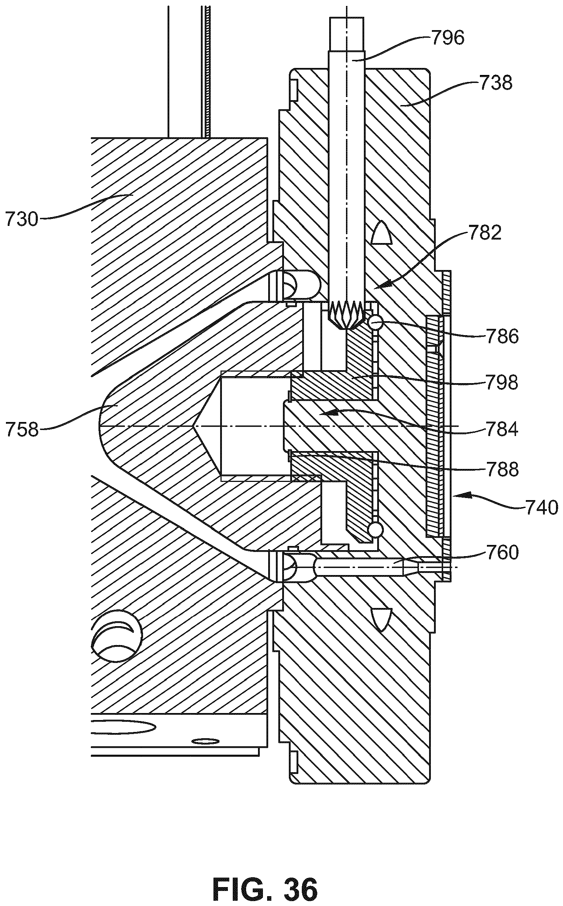

Die Fig. 35 und 36 zeigen ein weiteres Ausführungsbeispiel, bei welchem ebenfalls eine mechanische Axialverstellung eines Leitkonus 758 vorgenommen wird. Allerdings ist das betreffende Verstellelement bzw. der Verstellstift 796 nicht länger im Bereich einer Düsenplatte 740, sondern nach radial außen aus einem Düsenkörper 738 nach außen geführt. Der Ventilstift 796 ist zu diesem Zweck in einer radialen Ausnehmung in dem Düsenkörper 738 angeordnet. An seiner nach innen gerichteten Seite weist der Verstellstift 796 in Zusammenschau mit einem Rotationskörper 798 einen Getriebeabschnitt 782 auf. Mittels des Getriebeabschnittes 782 wird eine Rotationsbewegung des Ventilstiftes 796 auf den Rotationskörper 798 dergestalt übertragen, dass dieser nunmehr um eine Drehachse, welche im Wesentlichen der Längsachse des Düsenkörpers 738 entspricht, rotierbar ist. Der Rotationskörper 798 ist mittels einer Kugellagerung 786 geführt. Ferner ist die Position des Rotationskörpers 798 auf einem Aufnahmeabschnitt 784 des Düsenkörpers 738 durch einen Sicherungsring 788 festgelegt. An dem Rotationskörper 798 ist ferner bereichsweise ein Außengewinde 780 angeordnet, welches mit einem Leitkonus-Innengewinde 778 in Eingriff steht. Dieses bewirkt, dass eine Rotationsbewegung des Rotationskörpers 798 zur Folge hat, dass sich die axiale Position des axial verstellbaren Leitkonus 758 ändert. Die Veränderung der Position des axial verstellbaren Leitkonus 758 wiederum bewirkt eine Veränderung des Strömungsquerschnitts zwischen dem Grundkörper 730 und dem axial verstellbaren Leitkonus 758.

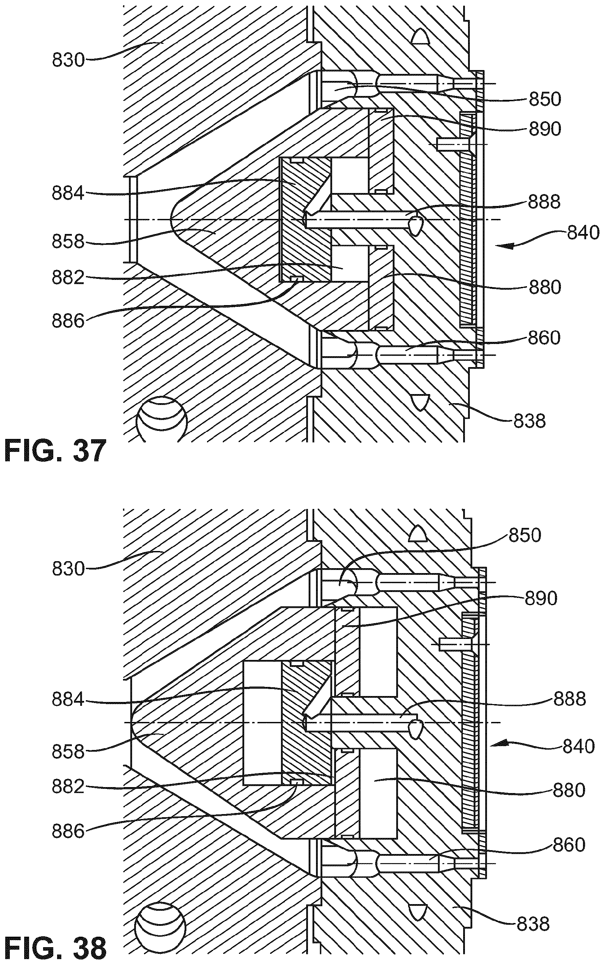

Ein weiteres alternatives Ausführungsbeispiel eines fluidisch axial verstellbaren Leitkonus 858 ist in den Fig. 37 sowie 38 gezeigt. Der axial verstellbare Leitkonus 858 ist in einem Düsenkörper 838 axial beweglich gelagert und mittels Fluid, welches in eine erste Druckkammer 880 sowie eine zweite Druckkammer 882 einbringbar ist, axial verstellbar.

Ein axiales Verstellen des Leitkonus 858 bewirkt eine Veränderung des Strömungskanals zwischen einem Grundkörper 830 und dem axial verstellbaren Leitkonus 858. Eine Veränderung des freien Strömungsquerschnittes im Ringkanalabschnitt 850 erfolgt durch die axiale Verstellung des Leitkonus 858 nicht.

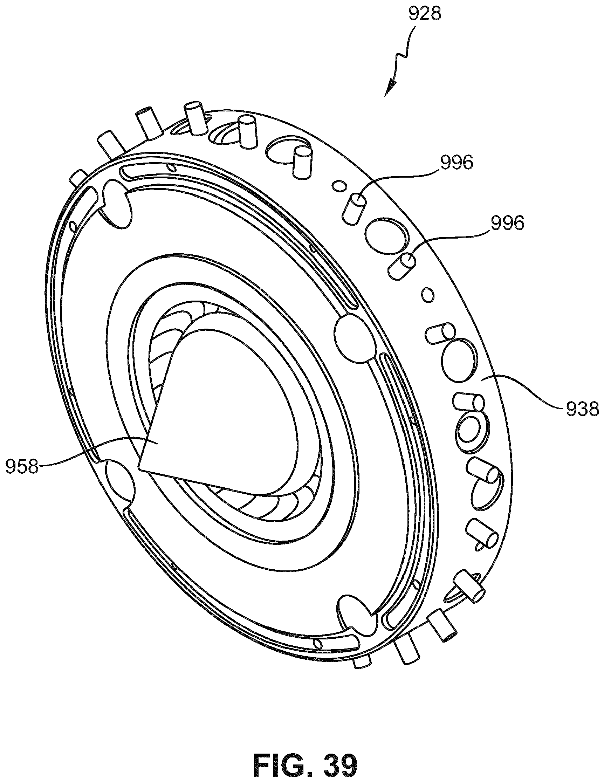

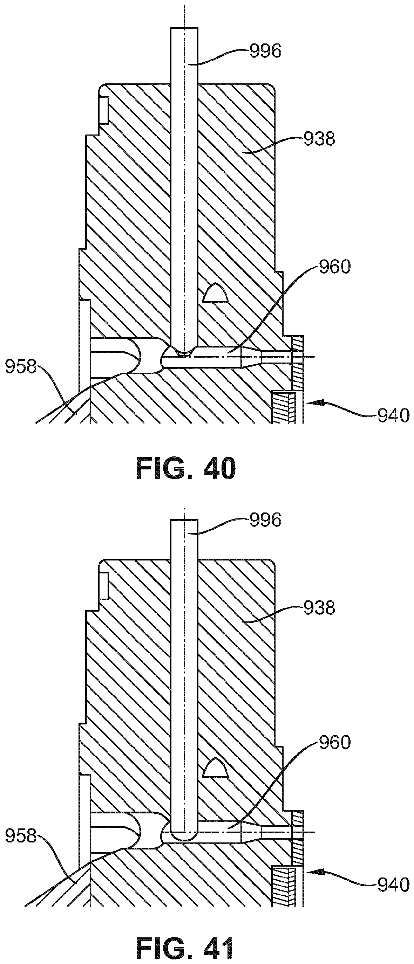

Fig. 39 zeigt eine Düseneinheit 928, welche einen Düsenkörper 938 aufweist, in welchem sich nach radial innen Drosselstifte 996 erstrecken. An dem Düsenkörper 938 ist ein Leitkonus 958 angeordnet. Die Fig. 40 sowie 41 zeigen Schnittansichten, welche einen Bereich des Düsenkörpers 938 betreffen. Durch den Düsenkörper 938 erstrecken sich vorliegend Düsenkörper-Strömungskanäle 960. Diese führen Fluid aus einem benachbart zu dem Leitkonus 958 angeordneten Strömungskanal 960 zu der Düsenplatte 940. Zur Regulierung des freien Strömungsquerschnittes in den Düsenkörper-Strömungskanälen 960 sind in dem Düsenkörper 938 Drosselstifte 996 angeordnet. Diese Drosselstifte 996 sind von außerhalb des Düsenkörpers 938 betätigbar und begrenzen den freien Strömungsquerschnitt der Düsenkörper-Strömungskanäle 960 in Abhängigkeit davon, wie weit die Drosselstifte 996 in Düsenkörper-Strömungskanäle 960 eingebracht werden. In dem in der Fig. 40 gezeigten Zustand begrenzt der Drosselstift 996 den Düsenkörper-Strömungskanal 960 nur teilweise. Bei dem in der Fig. 41 gezeigten Zustand ist der Drosselstift 996 nahezu vollständig in den Düsenkörper-Strömungskanal 960 eingeschoben und begrenzt diesen nahezu vollständig.

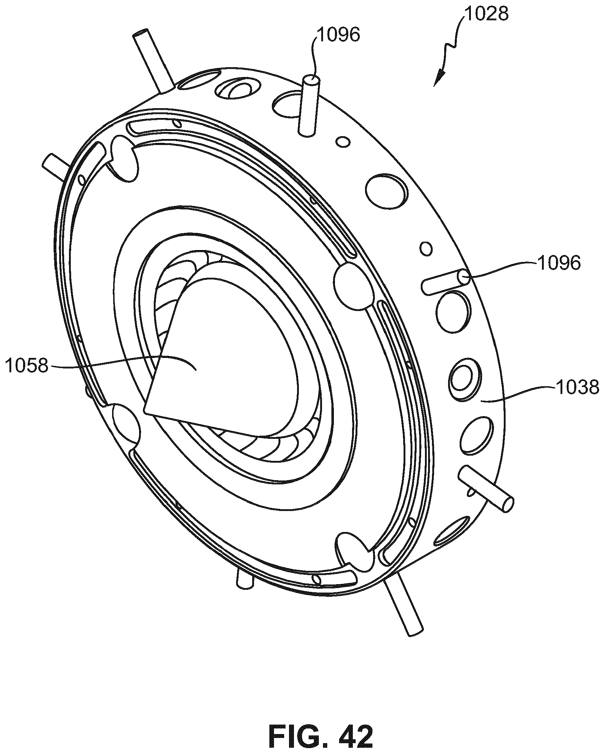

Ein weiteres alternatives Ausführungsbeispiel einer Düseneinheit 1028 ist in der Fig. 42 gezeigt. Erneut weist die Düseneinheit 1028 einen Düsenkörper 1038 auf, in welchem Schieberstangen 1096 eingebracht sind. Ferner ist an dem Düsenkörper 1038 ein Leitkonus 1058 angeordnet.

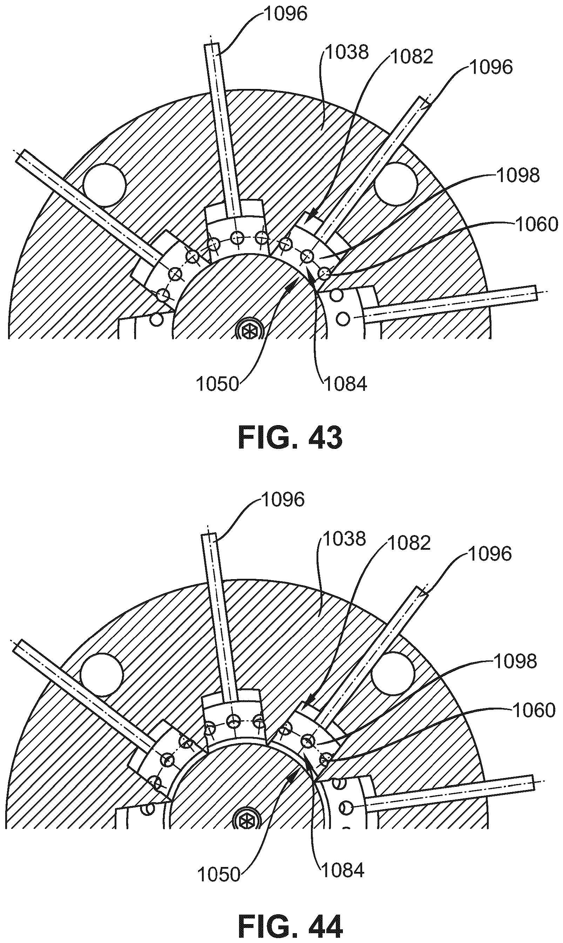

Die Funktionsweise der Düseneinheit 1028 lässt sich den Fig. 43 - 45 entnehmen. Wie in den Fig. 43 sowie 44 dargestellt, sind die Schieberstangen 1096 mit Schieberelementen 1098 gekoppelt. Diese Schieberelemente 1098 weisen Schieberbohrungen 1084 auf und sind innerhalb eines Schieberraumes 1082 bewegbar angeordnet. In dem in Fig. 43 gezeigten Betriebszustand sind die Schieberbohrungen 1084 in Überdeckung zu Düsenkörper-Strömungskanälen 1060 angeordnet. Mithin beeinflussen die Schieberelemente 1098 den freien Strömungsquerschnitt der Düsenkörper-Strömungskanäle 1060 nicht oder nur geringfügig.

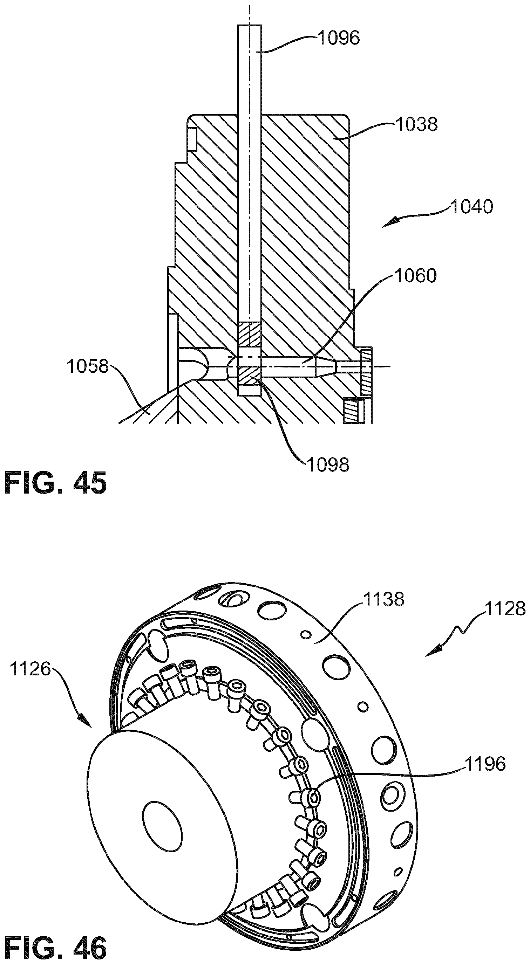

In dem in der Fig. 44 gezeigten Zustand wurde nun das Schieberelement 1098 so mit Hilfe der Schieberstangen 1096 verschoben, dass die Schieberbohrungen 1084 nur noch in teilweiser Überdeckung mit den Düsenkörper-Strömungskanälen 1060 stehen. Insoweit wird durch die Positionierung der Schieberelemente 1098 eine Beeinflussung des freien Strömungsquerschnittes erreicht. In der Fig. 45 ist der in der Fig. 44 gezeigte Zustand aus einer alternativen Schnittebenenführung zeigt. Auch hier wird erkennbar, dass durch die Position des Schieberelementes 1098 die Düsenkörper-Strömungskanäle 1060 lokal begrenzt werden, sodass eine Beeinflussung des freien Strömungsquerschnittes erfolgt.

Ein weiteres alternatives Ausführungsbeispiel ist in den Fig. 46 - 50 gezeigt. Unter Bezugnahme auf Fig. 46 weist eine Düseneinheit 1128 eine Druckreguliervorrichtung 1126 auf. Die Düseneinheit 1128 weist einen Grundkörper 1130 auf. In die Druckreguliervorrichtung 1126 sind Einstellschrauben 1196 eingebracht.

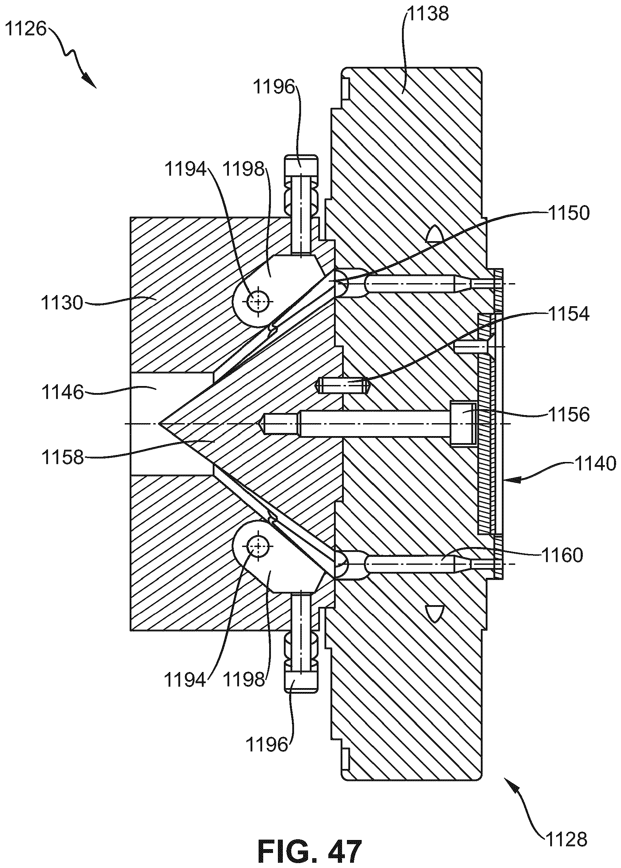

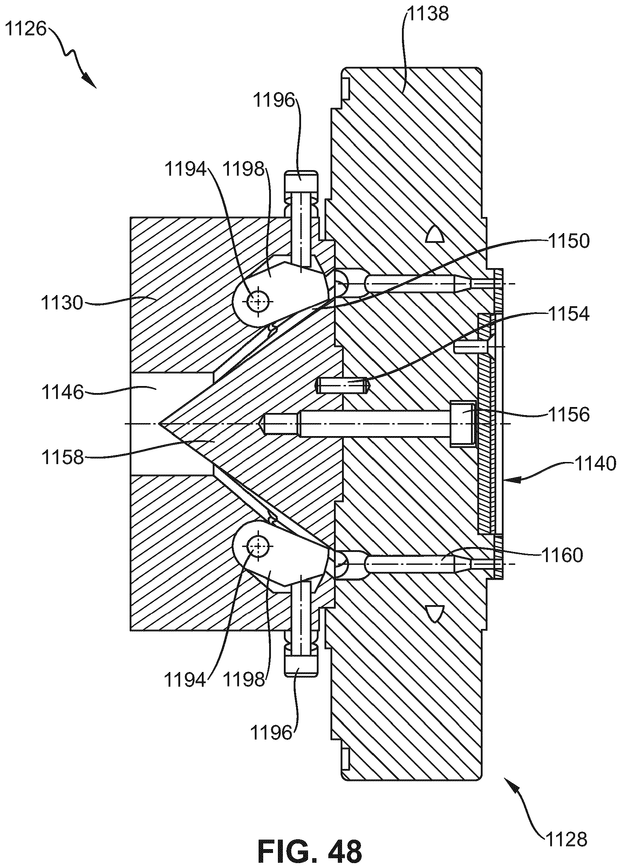

Die Fig. 47 und 48 zeigen Schnittansichten der Düseneinheit 1128 in unterschiedlichen Betriebszuständen. Der Düsenkörper 1138 weist Düsenkörper-Strömungskanäle 1160 auf. Mit dem Düsenkörper 1138 verbunden ist ein Leitkonus 1158. Die Verbindung erfolgt mittels eines Zentrierstiftes 1154 sowie einer Konusbefestigungsschraube 1156. Mit dem Düsenkörper 1138 ist die Druckreguliervorrichtung 1126 gekoppelt, welche einen Grundkörper 1130 aufweist, in welchem sich in Zusammenschau mit dem Leitkonus 1158 der Düseneinheit 1128 ein Strömungskanal 1146 ausbildet.

Im Bereich dieses Strömungskanals 1146 zwischen dem Grundkörper 1130 und dem Leitkonus 1158 sind Drosselelemente 1198 angeordnet. Die Drosselelemente 1198 sind auf einer Drehachse 1194 drehbar angeordnet. Mittels einer Einstellschraube 1196, die auf das Drosselelement 1198 wirkt, lässt sich das Drosselelement 1198 in den Bereich des Strömungskanals 1146 zwischen dem Leitkonus 1158 und dem Grundkörper 1130 schwenken, womit der freie Strömungsquerschnitt in diesem Bereich je nach Position des Drosselelementes 1198 beschränkt wird. Bei dem in der Fig. 47 gezeigten Zustand des Drosselelementes 1198 wird der Strömungskanal 1146 nicht oder nur sehr geringfügig begrenzt.

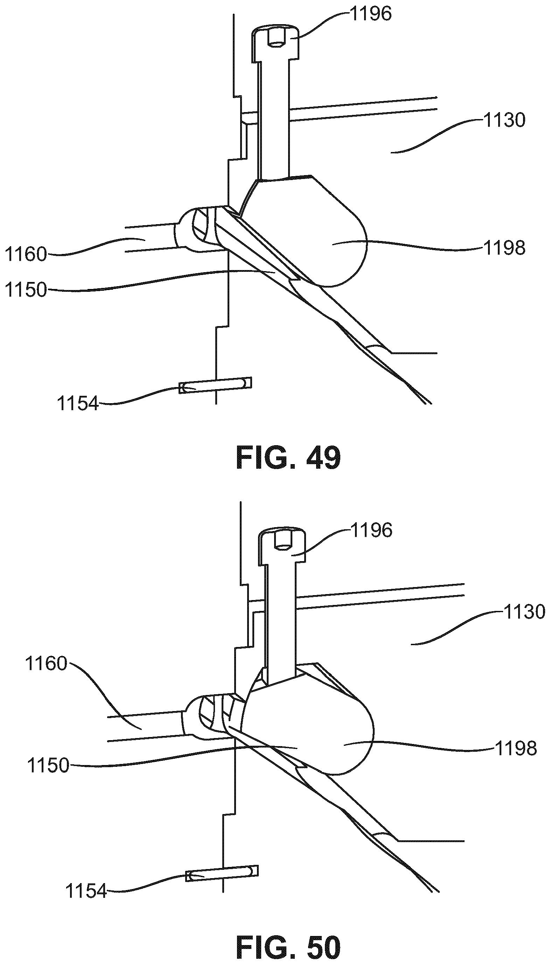

Bei dem in der Fig. 48 gezeigten Zustand hingegen erstreckt sich das Drosselelement 1198 nahezu vollständig in den sich zwischen dem Grundkörper 1130 und dem Leitkonus 1158 ausbildenden Strömungskanal hinein. Die Auswirkungen der Positionierung der Drosselelemente 1198 sind zusätzlich in den Fig. 49 und 50 veranschaulicht. Allerdings weisen die in den Fig. 49 und 50 gezeigten Drosselelemente 1198 im Vergleich zu den in den Fig. 47 und 48 gezeigten Drosselelementen keine Drehachsen auf.

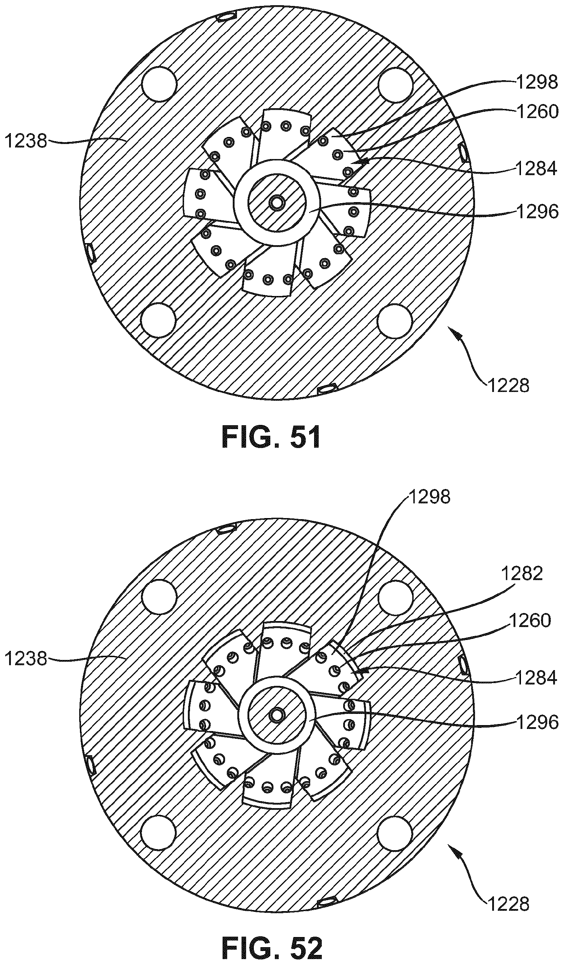

Die Fig. 51 und 52 zeigen ein alternatives Ausführungsbeispiel einer Düseneinheit 1228. Die Düseneinheit 1228 weist einen Düsenkörper 1238 auf. Um eine Längsachse des Düsenkörpers 1238 herum ist eine Schieberverstelleinrichtung 1296 angeordnet. Die Schieberverstelleinrichtung 1296 ist drehbar gelagert. Mit der Schieberverstelleinrichtung 1296 sind Schieberelemente 1298 gekoppelt, welche jeweils Schieberbohrungen 1284 aufweisen. In dem in der Fig. 51 gezeigten Betriebszustand sind die Schieberbohrungen 1284 der Schieberverstelleinrichtung 1296 in Überdeckung und mithin fluchtend zu den Düsenkörper-Strömungskanälen 1260 angeordnet. Somit findet in dem in der Fig. 51 gezeigten Betriebszustand keine wesentliche Beeinflussung der Düsenkörper-Strömungskanäle 1260 statt.

Bei dem in der Fig. 52 gezeigten Zustand hingegen sind die Schieberelemente 1298 gegenüber den Düsenkörper-Strömungskanälen 1260 nicht fluchtend angeordnet. Die Positionierung der Schieberelemente 1298 bewirkt vorliegend eine Begrenzung der Düsenkörper-Strömungskanäle 1260 und reduziert den vorliegenden freien Strömungsquerschnitt. Mittels der Position der Schieberelemente 1298 relativ zu den Düsenkörper-Strömungskanälen 1260 kann eine Regulierung des freien Strömungsquerschnittes erfolgen.

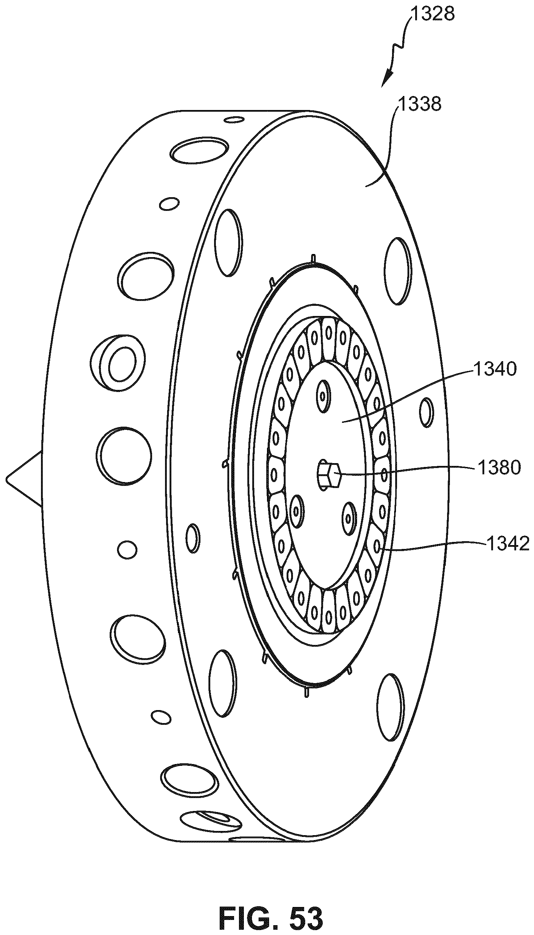

Ein weiteres alternatives Ausführungsbeispiel einer Düseneinheit 1328 ist in den Fig. 53-56 gezeigt. Fig. 53 zeigt zunächst eine Düseneinheit 1328 mit einem Düsenkörper 1338. An dem Düsenkörper 1338 ist eine Düsenplatte 1340 angeordnet, welche Düsenlöcher 1342 aufweist. Im Bereich der Düsenplatte 1340 ist ferner ein Verstellkopf 1380 angeordnet.

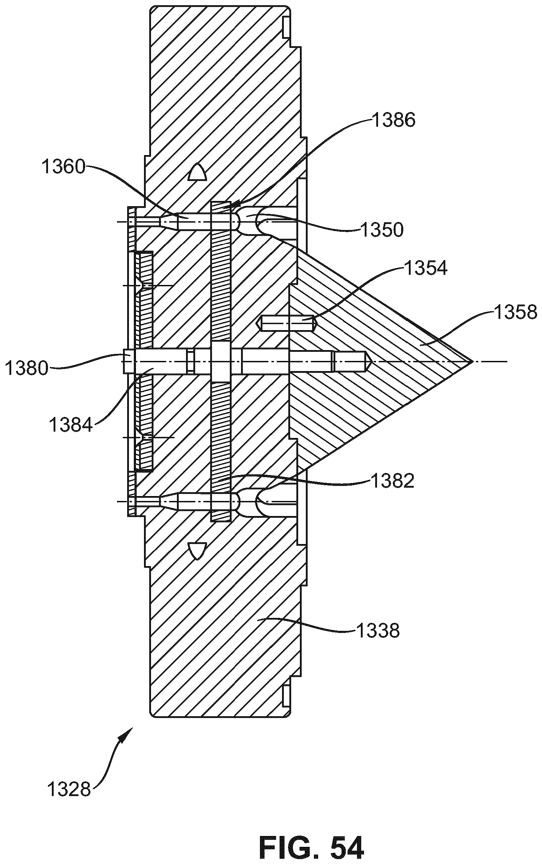

Fig. 54 ist der detaillierte Aufbau der Düseneinheit 1328 zu entnehmen. Die Düseneinheit 1328 weist einen Düsenkörper 1338 auf, in welchem Düsenkörper-Strömungskanäle 1360 angeordnet sind. An dem Düsenkörper 1338 ist ein Leitkonus 1358 angeordnet. Im Bereich einer Längsachse des Düsenkörpers 1338 ist ferner ein Verstellelement 1384 angeordnet.

Das Verstellelement 1384 weist an einer ersten Seite einen Verstellkopf 1380 auf. Auf dem Verstellelement 1384 ist eine Verstellscheibe 1382 angeordnet. Die Verstellscheibe 1382 weist Verstellscheibenbohrungen 1386 auf. Der Durchmesser der Verstellscheibenbohrungen 1346 entspricht dabei in etwa dem Durchmesser der Düsenkörper-Strömungskanäle 1360. Je nach Position, das heißt insbesondere je nach Drehwinkel der Verstellscheibe 1382 relativ zu den Düsenkörper-Strömungskanälen 1360 kann der freie Strömungsquerschnitt im Bereich der Düsenkörper-Strömungskanäle 1360 variiert werden.

Fluchten die Düsenkörper-Strömungskanäle 1360 mit den Verstellscheibenbohrungen 1386, findet keine wesentliche Beschränkung oder Begrenzung eines Fluidflusses durch die Düsenkörper-Strömungskanäle 1360 statt. Erfolgt jedoch mittels des Verstellkopfes 1380 eine Rotation der Verstellscheibe 1382 aus der in der Fig. 54 gezeigten Position dergestalt, dass die Verstellscheibenbohrung 1386 nicht länger mit den Düsenkörper-Strömungskanälen 1360 fluchtet, so findet eine Begrenzung der Strömungsverhältnisse in den Düsenkörper-Strömungskanälen 1360 statt.

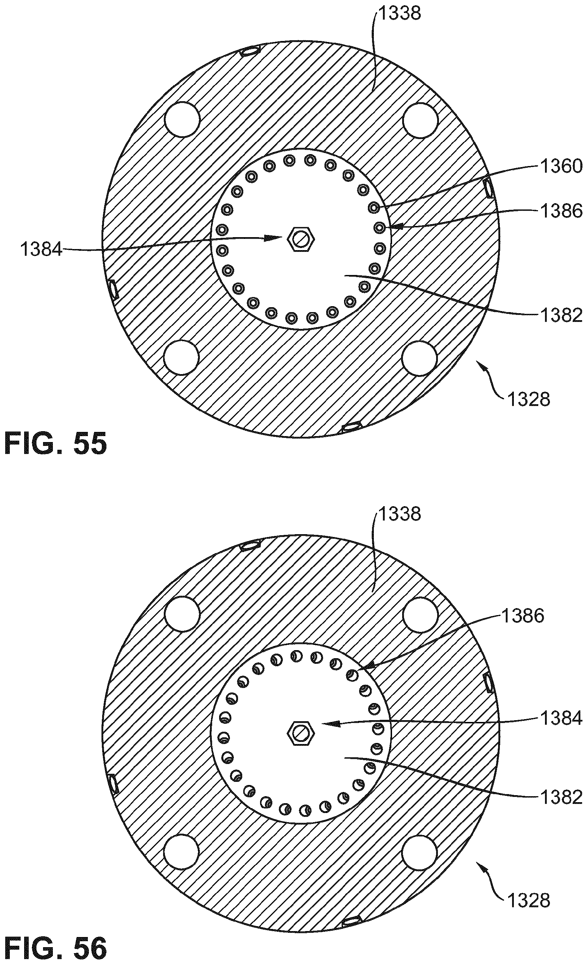

Die Fig. 55 und 56 veranschaulichen dies. In dem in der Fig. 55 gezeigten Zustand fluchten die Verstellscheibenbohrungen 1386 mit den Düsenkörper-Strömungskanälen 1360 und es findet mithin keine oder keine wesentliche Begrenzung des Fluidstroms durch die Düsenkörper-Strömungskanäle 1360 statt.

Bei dem in der Fig. 56 gezeigten Zustand hingegen fluchten die Verstellscheibenbohrungen 1386 nicht länger mit den Düsenkörper-Strömungskanälen 1360, sodass eine Begrenzung des Strömungsquerschnittes durch die Düsenkörper-Strömungskanäle 1360 im Bereich der Verstellscheibe 1382 erfolgt.

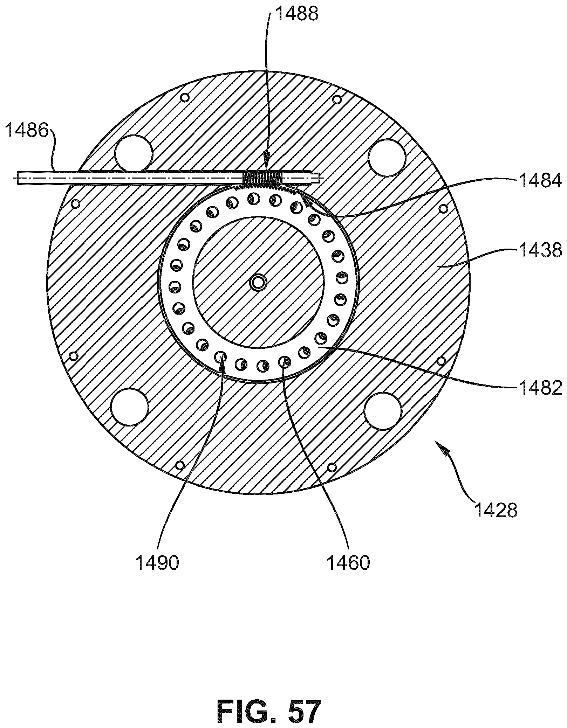

Eine alternative Ausführungsform einer Düseneinheit 1428 ist in Fig. 57 gezeigt. Die Düseneinheit 1428 weist eine Verstellscheibe 1482 auf, die relativ zu einem Düsenkörper 1438 beweglich gelagert ist. Die Verstellscheibe 1482 weist Verstellscheibenbohrungen 1490 auf, die relativ zu Düsenkörper-Strömungskanälen 1460 fluchtend relativ positioniert werden können, sodass eine Begrenzung eines Fluidflusses durch die Düsenkörper-Strömungskanäle 1460 quasi nicht erfolgt, oder, wie in Fig. 57 gezeigt, gegenüber diesen in eine nicht fluchtende Position gebracht werden können zur Begrenzung des Fluidstromes durch die Düsenkörper-Strömungskanäle 1460. Zur Ansteuerung der Verstellscheibe 1482 weist die Verstellscheibe 1482 einen Gewindeabschnitt 1484 auf. Ein in dem Düsenkörper 1438 angeordnetes Verstellelement 1486 weist im Bereich eines seiner Enden eine Schnecke 1488 auf. Die Schnecke 1488 korrespondiert mit dem Gewindeabschnitt 1484 dergestalt, dass eine Rotation des Verstellelementes 1486 mit der Schnecke 1488 eine Rotation der Verstellscheibe 1482 bewirkt. Das Verstellelement 1486 ist so geführt, dass eines seiner Enden von außerhalb des Düsenkörpers 1438 betätig bar ist.

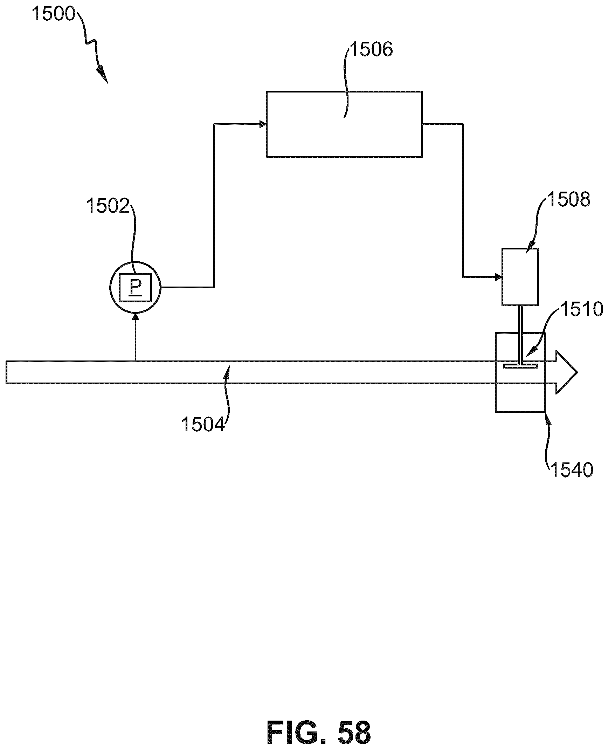

Fig. 58 zeigt ein Steuerungsblockschaltbild 1500 zur Steuerung einer Druckreguliervorrichtung 1510. Die Anordnung weist einen Drucksensor 1502 auf, der mit einer Steuerung 1506 signalleitend verbunden ist. In Abhängigkeit von dem mit dem Drucksensor 1502 gemessenen Druckwert betätigt die Steuerung 1506 einen Aktuator 1508, der seinerseits eine Druckreguliervorrichtung 1510 in Abhängigkeit von dem mit dem Drucksensor 1502 gemessenen Druckwert ansteuert. Mittels der Steuerung 1506 kann der Druck in einem Kunststoffschmelzestrom 1504 im Bereich einer Düsenplatte 1540 auf die gewünschte Art und mittels der in den Ausführungsbeispielen genannten und beschriebenen technischen Einrichtungen beeinflusst werden.

### Bezuqszeichenliste

- 2: Granuliervorrichtung
- 4: Düsenanordnung
- 6: Antrieb
- 8: Gehäuse
- 10: Bodenabschnitt
- 12: Prozesswasserauslass
- 14: Granulator
- 16: Schutzhaube
- 18: Grundplatte
- 20: Maschinenträger
- 22: Beabstandungselemente
- 24: Prozesswassereinlass
- 26: Druckreguliervorrichtung
- 28: Düseneinheit
- 30: Grundkörper
- 31: Gehäuseabschnitt
- 32: Fluid-Eintrittsseite
- 34: Aktuator
- 36: Betätigungsmutter
- 38, 38a,: Düsenkörper
- 38b 40: Düsenplatte
- 42: Düsenlöcher
- 44: Hülse
- 46: Strömungskanal
- 48: Fluid-Austrittsseite
- 50: Ringkanalabschnitt
- 52: Regelabschnitt
- 52a: konkav ausgebildeter Regelabschnitt
- 52b: konvex ausgebildeter Regelabschnitt
- 54: Zentrierstift
- 56: Konusbefestigungsschraube
- 58: Leitkonus
- 60: Düsenkörper-Strömungskanäle
- 62: Schraube
- 64, 66: Befestigungsmuttern
- 68: Unterlegscheibe
- 70: Erste Begrenzungsschulter
- 72: Zweite Begrenzungsschulter
- 74: Stifte
- 104: Düsenanordnung
- 126: Druckreguliervorrichtung
- 130: Grundkörper
- 146: Strömungskanal
- 150: Ringkanalabschnitt
- 174: Stifte
- 176: Betätigungselement
- 178: Stößel
- 180: Betätigungselement (Zahnrad)
- 182: Handhebel
- 184: Haltering
- 186: Regulierring
- 188: Kopplungseinrichtung
- 190: Abschlussring
- 204: Düsenanordnung
- 226: Druckreguliervorrichtung
- 230: Grundkörper
- 236: Betätigungsmutter/Schraube
- 246: Strömungskanal
- 250: Ringkanalabschnitt
- 274: Stifte
- 292: Aufnahmering
- 294: Verbindungsring
- 296: Verlängerte Stifte
- 304: Düsenanordnung
- 328: Düseneinheit
- 338: Düsenkörper
- 340: Düsenplatte
- 356: Konusbefestigungsschraube
- 358: Leitkonus
- 398: Heizkranz
- 426: Druckreguliervorrichtung
- 428: Düseneinheit
- 430: Grundkörper
- 432: Fluid-Eintrittsseite
- 438: Düsenkörper
- 440: Düsenplatte
- 446: Strömungskanal
- 450: Ringkanalabschnitt
- 454: Zentrierstift
- 456: Konusbefestigungsschraube
- 458: Leitkonus
- 460: Düsenkörper-Strömungskanäle
- 474: Stifte
- 484: Ein-/Auslass für Druckfluid
- 486: Ein-/Auslass für Druckfluid
- 488: Erster Gehäusering
- 490: Zweiter Gehäusering
- 492: Faltenbalg
- 494: Kolben
- 496: Zylinderraum
- 528,528a: Düseneinheit
- 530: Grundkörper
- 538, 538a: Düsenkörper
- 540: Düsenplatte
- 550: Ringkanalabschnitt
- 558, 558a: Axial verstellbarer Leitkonus
- 560: Düsenkörper-Strömungskanäle
- 580: Erste Druckkammer
- 582: Zweite Druckkammer
- 584: Verteilerabschnitt
- 586: Dichtring
- 588: Ein-/Auslass für Druckfluid
- 590: Druckkammerring
- 592: Konusführung
- 594: Faltenbalg
- 596: Trapezabschnitt
- 630: Grundkörper
- 638: Düsenkörper
- 640: Düsenplatte
- 650: Ringkanalabschnitt
- 654: Zentrierstift
- 658: Axial verstellbarer Leitkonus
- 660: Düsenkörper-Strömungskanäle
- 694: Gewindestiftaufnahme
- 696: Gewindestift
- 698: Mutter
- 730: Grundkörper
- 738: Düsenkörper
- 740: Düsenplatte
- 758: Axial verstellbarer Leitkonus
- 760: Düsenkörper-Strömungskanäle
- 778: Leitkonus-Innengewinde
- 780: Außengewinde
- 782: Getriebeabschnitt
- 784: Aufnahmeabschnitt
- 786: Kugellagerung
- 788: Sicherungsring
- 796: Verstellstift
- 798: Rotationskörper
- 830: Grundkörper
- 838: Düsenkörper
- 840: Düsenplatte
- 850: Ringkanalabschnitt
- 858: Axial verstellbarer Leitkonus
- 860: Düsenkörper-Strömungskanäle
- 880: Erste Druckkammer
- 882: Zweite Druckkammer
- 884: Verteilerabschnitt
- 886: Dichtring
- 888: Ein-/Auslass für Druckfluid
- 890: Druckkammerring
- 928: Düseneinheit
- 938: Düsenkörper
- 940: Düsenplatte
- 958: Leitkonus
- 960: Düsenkörper-Strömungskanäle
- 996: Drosselstifte
- 1028: Düseneinheit
- 1038: Düsenkörper
- 1040: Düsenplatte
- 1050: Ringkanalabschnitt
- 1058: Leitkonus
- 1060: Düsenkörper-Strömungskanäle
- 1082: Schieberraum
- 1084: Schieberbohrungen
- 1096: Schieberstange
- 1098: Schieberelement
- 1126: Druckreguliervorrichtung
- 1128: Düseneinheit
- 1130: Grundkörper
- 1138: Düsenkörper
- 1140: Düsenplatte
- 1146: Strömungskanal
- 1150: Ringkanalabschnitt
- 1154: Zentrierstift
- 1156: Konusbefestigungsschraube
- 1158: Leitkonus
- 1160: Düsenkörper-Strömungskanäle
- 1194: Drehachse
- 1196: Einstellschraube
- 1198: Drosselelement
- 1228: Düseneinheit
- 1238: Düsenkörper
- 1260: Düsenkörper-Strömungskanäle
- 1284: Schieberbohrungen
- 1296: Schieberverstelleinrichtung
- 1298: Schieberelement
- 1328: Düseneinheit
- 1338: Düsenkörper
- 1340: Düsenplatte
- 1342: Düsenlöcher
- 1350: Ringkanalabschnitt
- 1354: Zentrierstift
- 1358: Leitkonus
- 1360: Düsenkörper-Strömungskanäle
- 1380: Verstellkopf
- 1382: Verstellscheibe
- 1384: Verstellelement
- 1386: Verstellscheibenbohrung
- 1428: Düseneinheit
- 1438: Düsenkörper
- 1460: Düsenkörper-Strömungskanäle
- 1482: Verstellscheibe
- 1484: Gewindeabschnitt
- 1486: Verstellelement
- 1488: Schnecke
- 1490: Verstellscheibenbohrung
- 1500: Steuerungsblockschaltbild
- 1502: Drucksensor
- 1504: Klebstoffschmelzestrom
- 1506: Steuerung
- 1508: Aktuator
- 1510: Druckreguliervorrichtung
- 1540: Düsenplatte

## Patentansprüche

1. Düsenanordnung (4, 104, 204, 304) für eine Granuliervorrichtung (2), mit
- einer Düsenplatte (40, 340, 440, 540, 640, 740, 840, 940, 1040, 1140, 1340, 1540) mit Düsenlöchern (42, 1342), und
- einer Druckreguliervorrichtung (26, 126, 226, 426, 1126, 1510), umfassend:
- einen Grundkörper (30, 130, 230, 430) mit einer Fluid-Eintrittsseite (32, 432) sowie einer Fluid-Austrittsseite (48),
- einen in dem Grundkörper (30, 130, 230, 430) ausgebildeten Strömungskanal (46, 146, 246, 446, 1146) zur fluidleitenden Verbindung der Fluid-Eintrittsseite (32, 432) mit der Fluid-Austrittsseite (48), und
- einen mit dem Strömungskanal (46, 146, 246, 446, 1146) fluidleitend verbundenen und im Bereich der Fluid-Austrittsseite (48) ausgebildeten Ringkanalabschnitt (50, 150, 250, 450, 550, 650, 850, 1050, 1150, 1350),
**gekennzeichnet durch** ein relativ zu dem Ringkanalabschnitt (50, 150, 250, 450, 550, 650, 850, 1050, 1150, 1350) und/oder dem Strömungskanal (46, 146, 246, 446, 1146) bewegbares Strömungsquerschnitts-Regulierelement (52, 186, 274, 474, 996, 1098, 1198, 1298, 1482) zur Beeinflussung eines Strömungsquerschnitts des Ringkanalabschnitts (50, 150, 250, 450, 550, 650, 850, 1050, 1150, 1350).

2. Düsenanordnung (4, 104, 204, 304) nach Anspruch 1,
**dadurch gekennzeichnet, dass** das Regulierelement (52, 186, 274, 474, 996, 1098, 1198, 1298, 1482) in dem Ringkanalabschnitt (50, 150, 250, 450, 550, 650, 850, 1050, 1150, 1350) angeordnet ist.

3. Düsenanordnung (104) nach einem der vorhergehenden Ansprüche,
**dadurch gekennzeichnet, dass** das Regulierelement (186) einen Regulierring (186) sowie einen mit dem Regulierring (186) verbundenen Haltering (184) aufweist.

4. Düsenanordnung (104) nach Anspruch 3,
**dadurch gekennzeichnet, dass** der Regulierring (186) keilförmig ausgebildet ist.

5. Düsenanordnung (104) nach einem der Ansprüche 3 oder 4,
**dadurch gekennzeichnet, dass** der Regulierring (186) Stifte (174) aufweist, welche sich in Abhängigkeit von der Position des Regulierrings (186) zumindest abschnittsweise in den Ringkanalabschnitt (150) erstrecken.

6. Düsenanordnung (4) nach einem der vorhergehenden Ansprüche, **gekennzeichnet durch** mindestens einen mit dem Regulierelement (52) wirkverbundenen Aktuator (34, 1508) zur Bewegung des Regulierelements (52) relativ zu dem Ringkanalabschnitt (150), insbesondere translatorisch in Richtung einer Grundkörperlängsachse.

7. Düsenanordnung (4) nach Anspruch 6,
**dadurch gekennzeichnet, dass** der Aktuator (1508) als fluidbetätigter Aktuator (1508) ausgebildet ist, insbesondere als pneumatischer Aktuator oder hydraulischer Aktuator.

8. Düsenanordnung (4) nach Anspruch 7,
**dadurch gekennzeichnet, dass** der fluidbetätigte Aktuator (1508) einen Zylinder mit mindestens einem Druckfluid Ein-/Auslass aufweist, wobei der Zylinder und der mindestens eine Druckfluid Ein-/Auslass in dem Grundkörper ausgebildet sind.

9. Düsenanordnung (104) nach einem der Ansprüche 6 bis 8,
**dadurch gekennzeichnet, dass** der Aktuator ein mit dem Haltering (184) verbundenes Betätigungselement (176) aufweist, welcher mit einem translatorisch bewegbaren Stößel (178) wirkverbunden ist.

10. Düsenanordnung (104) nach Anspruch 9,
**dadurch gekennzeichnet, dass** der Grundkörper (130) mindestens eine Lagerungsbohrung zur Lagerung des Stößels (178) und zur Führung des Stößels (178) zu einer Außenseite des Grundkörpers (130) aufweist.

11. Düsenanordnung (104) nach einem der Ansprüche 9 oder 10,
**dadurch gekennzeichnet, dass** der Stößel (178) ein Betätigungselement (180) aufweist, insbesondere eine außerhalb des Grundkörpers angeordnete Mutter oder ein Zahnrad.

12. Düsenanordnung (104) nach Anspruch 11,
**gekennzeichnet durch** eine Kopplungseinrichtung (188) zur Kopplung der Betätigungselemente (180) von mindestens zwei Aktuatoren.

13. Düsenanordnung (104) nach Anspruch 12,
**dadurch gekennzeichnet, dass** die Kopplungseinrichtung (188) als Hohlrad ausgebildet ist, welches mit den Betätigungselementen (180), insbesondere den Zahnrädern, der mehreren Betätigungselemente (180) in Eingriff steht, sodass eine Betätigung des Hohlrades eine Betätigung der Betätigungselemente (180) bewirkt.

14. Granuliervorrichtung (2) zur Herstellung von Granulat aus einem Schmelzefluss, mit einer Düsenanordnung (4),
**dadurch gekennzeichnet, dass** die Düsenanordnung (4) nach einem der Ansprüche 1 bis 13 ausgebildet ist.

15. Verfahren zur Druckregulierung eines Schmelzeflusses in einer Düsenanordnung (4, 104, 204, 304) nach einem der Ansprüche 1-13 oder einer Granuliervorrichtung (2) nach Anspruch 14, mindestens aufweisend die Schritte:
- Bereitstellen eines Schmelzeflusses an einer Druckreguliervorrichtung (26, 126, 226, 426, 1126, 1510);
- Leiten des Schmelzeflusses zu einem Ringkanalabschnitt (50, 150, 250, 450, 550, 650, 850, 1050, 1150, 1350) der Druckreguliervorrichtung (26, 126, 226, 426, 1126, 1510); und
- Regulieren des freien Strömungsquerschnitts des Ringkanalabschnitts (50, 150, 250, 450, 550, 650, 850, 1050, 1150, 1350).

## Claims

1. Nozzle arrangement (4, 104, 204, 304) for a granulation device (2), having
- a nozzle plate (40, 340, 440, 540, 640, 740, 840, 940, 1040, 1140, 1340, 1540) with nozzle holes (42, 1342), and
- a pressure-regulating device (26, 126, 226, 426, 1126, 1510) comprising:
- a basic body (30, 130, 230, 430) with a fluid-inlet side (32, 432) and also a fluid-outlet side (48),
- a flow channel (46, 146, 246, 446,1146) which is configured in the basic body (30, 130, 230, 430) for fluid-conducting connection of the fluid-inlet side (32, 432) to the fluid-outlet side (48), and
- an annular channel portion (50, 150, 250, 450, 550, 650, 850, 1050, 1150, 1350) which is connected for fluid conduction to the flow channel (46, 146, 246, 446, 1146) and configured in the region of the fluid-outlet side (48),
**characterised by** a flow cross-section regulating element (52, 186, 274, 474, 996, 1098, 1198, 1298, 1482) which is movable relative to the annular channel portion (50, 150, 250, 450, 550, 650, 850, 1050, 1150, 1350) and/or to the flow channel (46, 146, 246, 446, 1146) for influencing a flow cross-section of the annular channel portion (50, 150, 250, 450, 550, 650, 850, 1050, 1150, 1350).

2. Nozzle arrangement (4, 104, 204, 303) according to claim 1,
**characterised in that** the regulating element (52, 186, 274, 474, 996, 1098, 1198, 1298, 1482) is disposed in the annular channel portion (50, 150, 250, 450, 550, 650,850, 1050, 1150, 1350).

3. Nozzle arrangement (104) according to one of the preceding claims, **characterised in that** the regulating element (186) has a regulating ring (186) and also a retaining ring (184) which is connected to the regulating ring (186).

4. Nozzle arrangement (104) according to claim 3,
**characterised in that** the regulating ring (186) has a wedge-shaped configuration.

5. Nozzle arrangement (104) according to one of claims 3 or 4,
**characterised in that** the regulating ring (186) has pins (174) which extend, at least in portions, into the annular channel portion (150) as a function of the position of the regulating ring (186).

6. Nozzle arrangement (4) according to one of the preceding claims,
**characterised by** at least one actuator (34, 1058) which is connected operationally to the regulating element (52) for moving the regulating element (52) relative to the annular channel portion (150), in particular in translation in the direction of a basic body longitudinal axis.

7. Nozzle arrangement (4) according to claim 6,
**characterised in that** the actuator (1508) is configured as fluid-actuated actuator (1508), in particular as pneumatic actuator or hydraulic actuator.

8. Nozzle arrangement (4) according to claim 7,
**characterised in that** the fluid-actuated actuator (1508) has a cylinder having at least one pressurised fluid inlet/outlet, the cylinder and the at least one pressurised fluid inlet/outlet being configured in the basic body.

9. Nozzle arrangement (104) according to one of claims 6 to 8,
**characterised in that** the actuator has an actuation element (176) which is connected to the retaining ring (184) and which is connected operationally to a tappet (178) which is movable in translation.

10. Nozzle arrangement (104) according to claim 9,
**characterised in that** the basic body (130) has at least one mounting boring for mounting the tappet (178) and for guiding the tappet (178) to an outer side of the basic body (130).

11. Nozzle arrangement (104) according to one of claims 9 or 10,
**characterised in that** the tappet (178) has an actuation element (180), in particular a nut or a toothed wheel which is disposed outside the basic body.

12. Nozzle arrangement (104) according to claim 11,
**characterised by** a coupling device (188) for coupling of the actuation elements (180) of at least two actuators.

13. Nozzle arrangement (104) according to claim 12,
**characterised in that** the coupling device (188) is configured as a hollow wheel which is in engagement with the actuation elements (180), in particular the toothed wheels, of the plurality of actuation elements (180), so that an actuation of the hollow wheel effects an actuation of the actuation elements (180).

14. Granulation device (2) for the production of granulate from a melt flow, having a nozzle arrangement (4),
**characterised in that** the nozzle arrangement (4) is configured according to one of claims 1 to 13.

15. Method for pressure regulation of a melt flow in a nozzle arrangement (4, 104, 204, 304) according to one of claims 1 - 13 or in a granulation device (2) according to claim 14, having at least the steps:
- providing a melt flow to a pressure-regulating device (26, 126, 226, 426, 1126, 1510);
- conducting the melt flow to an annular channel portion (50, 150, 250, 450, 550, 650, 850, 1050, 1150, 1350) of the pressure-regulating device (26, 126, 226, 426, 1126, 1510); and
- regulating the free flow cross-section of the annular channel portion (50, 150, 250, 450, 550, 650, 850, 1050, 1150, 1350).

## Revendications

1. Ensemble formant buse (4, 104, 204, 304) pour un dispositif de granulation (2), avec
- une plaque de buse (40, 340, 440, 540, 640, 740, 840, 940, 1040, 1140, 1340, 1540) avec des trous de buse (42, 1342), et
- un dispositif de régulation de pression (26, 126, 226, 426, 1126, 1510), comprenant :
- - un corps de base (30, 130, 230, 430) avec un côté d'entrée de fluide (32, 432) ainsi qu'un côté de sortie de fluide (48),
- - un canal d'écoulement (46, 146, 246, 446, 1146) réalisé dans le corps de base (30, 130, 230, 430) pour la liaison fluidique du côté d'entrée de fluide (32, 432) au côté de sortie de fluide (48), et
- - un tronçon de canal annulaire (50, 150, 250, 450, 550, 650, 850, 1050, 1150, 1350) se trouvant en liaison fluidique avec le canal d'écoulement (46, 146, 246, 446, 1146) et réalisé dans la zone du côté de sortie de fluide (48),
**caractérisé par** un élément de régulation de section transversale d'écoulement (52, 186, 274, 474, 996, 1098, 1198, 1298, 1482) pouvant être déplacé par rapport au tronçon de canal annulaire (50, 150, 250, 450, 550, 650, 850, 1050, 1150, 1350) et/ou au canal d'écoulement (46, 146, 246, 446, 1146) pour influencer une section transversale d'écoulement du tronçon de canal annulaire (50, 150, 250, 450, 550, 650, 850, 1050, 1150, 1350).

2. Ensemble formant buse (4, 104, 204, 304) selon la revendication 1,
**caractérisé en ce que** l'élément de régulation (52, 186, 274, 474, 996, 1098, 1198, 1298, 1482) est disposé dans le tronçon de canal annulaire (50, 150, 250, 450, 550, 650, 850, 1050, 1150, 1350).

3. Ensemble formant buse (104) selon l'une quelconque des revendications précédentes,
**caractérisé en ce que** l'élément de régulation (186) présente un anneau de régulation (186) ainsi qu'un anneau de maintien (184) relié à l'anneau de régulation (186).

4. Ensemble formant buse (104) selon la revendication 3,
**caractérisé en ce que** l'anneau de régulation (186) est réalisé de manière cunéiforme.

5. Ensemble formant buse (104) selon l'une quelconque des revendications 3 ou 4,
**caractérisé en ce que** l'anneau de régulation (186) présente des tiges (174), lesquelles s'étendent au moins par endroits dans le tronçon de canal annulaire (150) en fonction de la position de l'anneau de régulation (186).

6. Ensemble formant buse (4) selon l'une quelconque des revendications précédentes,
**caractérisé par** au moins un actionneur (34, 1508) coopérant avec l'élément de régulation (52) pour déplacer l'élément de régulation (52) par rapport au tronçon de canal annulaire (150), en particulier par translation en direction d'un axe longitudinal de corps de base.

7. Ensemble formant buse (4) selon la revendication 6,
**caractérisé en ce que** l'actionneur (1508) est réalisé en tant qu'actionneur (1508) actionné par un fluide, en particulier en tant qu'actionneur pneumatique ou actionneur hydraulique.

8. Ensemble formant buse (4) selon la revendication 7,
**caractérisé en ce que** l'actionneur (1508) actionné par un fluide présente un cylindre avec au moins une entrée/sortie de fluide sous pression, dans lequel le cylindre et l'au moins une entrée/sortie de fluide sous pression sont réalisés dans le corps de base.

9. Ensemble formant buse (104) selon l'une quelconque des revendications 6 à 8,
**caractérisé en ce que** l'actionneur présente un élément d'actionnement (176) relié à l'anneau de maintien (184), lequel coopère avec un poussoir (178) pouvant être déplacé par translation.

10. Ensemble formant buse (104) selon la revendication 9,
**caractérisé en ce que** le corps de base (130) présente au moins un alésage de support pour supporter le poussoir (178) et pour guider le poussoir (178) vers un côté extérieur du corps de base (130).

11. Ensemble formant buse (104) selon l'une quelconque des revendications 9 ou 10,
**caractérisé en ce que** le poussoir (178) présente un élément d'actionnement (180), en particulier un écrou disposé à l'extérieur du corps de base ou une roue dentée.

12. Ensemble formant buse (104) selon la revendication 11,
**caractérisé par** un système de couplage (188) pour coupler les éléments d'actionnement (180) d'au moins deux actionneurs.

13. Ensemble formant buse (104) selon la revendication 12,
**caractérisé en ce que** le système de couplage (188) est réalisé en tant que couronne, laquelle est en prise avec les éléments d'actionnement (180), en particulier les roues dentées, des plusieurs éléments d'actionnement (180) si bien qu'un actionnement de la couronne entraîne un actionnement des éléments d'actionnement (180).

14. Dispositif de granulation (2) pour fabriquer du granulat à partir d'un flux de matière fondue, avec un ensemble formant buse (4),
**caractérisé en ce que** l'ensemble formant buse (4) est réalisé selon l'une quelconque des revendications 1 à 13.

15. Procédé de régulation de pression d'un flux de matière fondue dans un ensemble formant buse (4, 104, 204, 304) selon l'une quelconque des revendications 1 - 13 ou un dispositif de granulation (2) selon la revendication 14, présentant au moins les étapes :
- de fourniture d'un flux de matière fondue sur un dispositif de régulation de pression (26, 126, 226, 426, 1126, 1510) ;
- d'acheminement du flux de matière fondue vers un tronçon de canal annulaire (50, 150, 250, 450, 550, 650, 850, 1050, 1150, 1350) du dispositif de régulation de pression (26, 126, 226, 426, 1126, 1510) ;
et
- de régulation de la section transversale d'écoulement libre du tronçon de canal annulaire (50, 150, 250, 450, 550, 650, 850, 1050, 1150, 1350).
